# EUROPEAN PATENT SPECIFICATION

(11) **EP 1 442 490 B1**
(45) Date of publication and mention of the grant of the patent: **14.11.2012**
(21) Application number: 02772869.0
(22) Date of filing: 20.09.2002
(51) Int. Cl.: H01M 4/58, C04B 35/524, C09C 1/48, C04B 35/532, H01M 4/02, C01B 31/04

(54) **CARBON MATERIAL, PRODUCTION METHOD AND USE THEREOF**
KOHLENSTOFFMATERIAL, VERFAHREN ZU SEINER HERSTELLUNG UND SEINE VERWENDUNG
MATIERE CARBONE, PROCEDE DE PRODUCTION ET UTILISATION DE CETTE MATIERE

(30) Priority: 25.09.2001 JP 2001290775; 27.11.2001 JP 2001360727; 23.04.2002 JP 2002120322
(43) Date of publication of application: 04.08.2004
(73) Proprietor: Showa Denko K.K., Tokyo 105-8518 (JP)
(72) Inventor: SUDO, Akinori, c/o Showa Denko K.K., Kawasaki-shi, Kanagawa 210-0858 (JP); SOTOWA, Chiaki, c/o Showa Denko K.K., Kawasaki-shi, Kanagawa 210-0858 (JP)
(74) Representative: Strehl Schübel-Hopf & Partner
(86) International application number: PCT/JP2002/009672
(87) International publication number: WO 2003/028128

(56) References cited:
- EP-A- 0 782 207
- EP-A- 0 861 804
- EP-A- 1 134 827
- US-B1- 6 194 067
- PATENT ABSTRACTS OF JAPAN vol. 200, no. 001, 31 January 2000 (2000-01-31) & JP 11 279785 A (OSAKA GAS), 12 October 1999 (1999-10-12)

## Description

### TECHNICAL FIELD

The present invention relates to a carbon material, to a production method therefor, and to use thereof. More particularly, the present invention relates to a carbon material suitable for a negative electrode material for a secondary battery, to a production method therefor, and to a negative electrode for a secondary battery having such a carbon material and to a secondary battery having such a negative electrode.

### BACKGROUND ART

In recent years, in accordance with development of small-sized portable electronic apparatuses, keen demand has arisen for a lithium ion secondary battery (hereinafter abbreviated as "LIB") having a high energy density. In most LIBs, graphite fine powder is employed as a negative electrode material, since graphite fine powder can intercalate lithium ions thereinto.

Conventional graphite material for forming a negative electrode has a discharge capacity within a practical range of 300 to 330 mAh/g. However, improvement of such graphite material has proceeded, and in recent years, graphite material having a discharge capacity nearly equal to 372 mAh/g (i.e., theoretical discharge capacity) has been developed.

The discharge capacity, when defined as the amount of lithium ions that undergoes reversible intercalation, is higher in graphite materials having higher graphite crystallinity. Natural graphite exhibits excellent carbon crystallinity as compared with artificial graphite, and a graphite material having high discharge capacity can be formed from natural graphite at low cost.

When such a graphite material is employed for forming a negative electrode, an electrolytic solution must be prepared from ethylene carbonate (hereinafter abbreviated as "EC") serving as a solvent. EC is known to form a coating, which is called an SEI (solid electrolyte interface), on the surface of a graphite electrode during initial charging. When such a coating is formed, breakage of graphite crystals during charging can be prevented.

EC is a relatively excellent organic solvent for preparing an organic electrolytic solution (hereinafter the solvent may be referred to as an "organic electrolytic solvent" or a "non-aqueous electrolytic solvent"). However, since EC assumes a solid form at ambient temperature, handling of EC is difficult. In addition, EC has poor low-temperature characteristics.

On the other hand, propylene carbonate (hereinafter abbreviated as "PC") is also a relatively excellent organic electrolytic solvent. Since PC assumes a liquid form at ambient temperature, handling of PC is relatively easy. In addition, PC has excellent low-temperature characteristics. However, PC fails to form an SEI on the surface of a graphite electrode during initial charging. Therefore, when a negative electrode is formed from a graphite material exhibiting excellent crystallinity and having exposed edges on the surface thereof, such as natural graphite, breakage of graphite crystals occurs during charging, rendering the resultant electrode difficult to employ as a negative electrode.

Graphitized mesophase microbeads are also known as a graphite material. Since the microbeads have no exposed edges on the surface thereof, they can be employed in an electrolytic solution containing PC while maintaining their performance. However, the microbeads have low discharge capacity, and the discharge capacity of the microbeads is difficult to increase to a level nearly equal to the theoretical discharge capacity.

In order to solve such problems, various methods have been proposed. For example, Japanese Patent No. 2643035 (U. S. Patent No. 5,344,726), Japanese Patent Application Laid-Open (*kokai*) No. 4-370662 (U. S. Patent No. 5, 401, 598), Japanese Patent No. 3139790, and Japanese Patent Application Laid-Open (kokai) No. 5-121066 disclose a carbon material obtained by coating the surfaces of graphite particles with low-crystalline carbon. Since this carbon material tends not to induce decomposition of an electrolytic solution, when the material is employed as an electrode material, discharge capacity and initial efficiency are effectively improved.

According to the technique disclosed in Japanese Patent No. 2643035 (U. S. Patent No. 5, 344, 726), a relatively uniform carbon material exhibiting excellent performance is obtained, since a carbon coating layer is formed on the surfaces of carbon particles through vapor phase deposition. However, this technique involves problems in terms of practical aspects, for example, production cost and mass production.

Japanese Patent Application Laid-Open (*kokai*) No. 4-370662 (U. S. Patent No. 5,401,598), Japanese Patent No. 3139790, and Japanese Patent Application Laid-Open (*kokai*) No. 5-121066 disclose a technique employing liquid-phase carbonization. This technique is advantageous from the economical viewpoint. However, when an organic compound of liquid phase and graphite particles are simply mixed and then fired, fusion and aggregation of the particles tend to occur, and thus an additional process such as repulverization of the particles is required; i.e., an intricate process is required. In addition, for example, coating of the surfaces of the repulverized particles tends to become insufficient.

Japanese Patent No. 2976299 (EP 0 861 804 A1) discloses a method in which a carbon material is impregnated with coal-based or petroleum-based heavy oil such as pitch or tar, and the resultant carbon material is washed with, for example, an appropriate organic solvent, and then subjected to firing treatment. According to this method, exposure of a pulverization surface tends not to occur. However, this method involves problems in terms of safety and handling, since most heavy oils such as pitch assume a solid form at ambient temperature, and contain a carcinogenic organic compound.

Some of the aforementioned publications disclose employment of a thermosetting resin. However, when the thermosetting resin disclosed in the publications is employed, removal of gas fails to proceed effectively during curing, and effervescence occurs, resulting in formation of micropores. Therefore, production of a carbon material which is useful in practice has been difficult.

Therefore, there has been a demand for a negative electrode material for a lithium secondary battery, which imposes few limitation on an electrolytic solution and for a method for the production of such a negative electrode material, which method is excellent in production cost and mass production and in which handleability and safety of the negative electrode material are improved.

On the other hand, when a graphite-based material is used as a negative electrode active material, employing a negative electrode active substance alone results in that the obtained negative electrode exhibits insufficient electrical conductivity. Therefore, in many cases, an electrical conductivity-imparting agent has also been employed. Specific examples of the electrical conductivity-imparting agent include carbon black, furnace black, and vapor grown carbon fiber. When, among these, vapor grown carbon fiber having branches extending in diversified directions is employed, the carbon fiber is entangled with a negative electrode active substance, and thus the resultant negative electrode exhibits enhanced electrical conductivity. Furthermore, even when a large amount of current is applied to the negative electrode, lowering of discharge capacity can be prevented, since current is considered to flow not only through contact points between the negative electrode active substance and the carbon fiber, but also through the vapor grown carbon fiber.

When vapor grown carbon fiber is employed, the carbon fiber must be mixed or kneaded with a negative electrode active substance by whatsoever means appropriate. Conventionally, these materials have been mixed together by means of a simple dry mixing method (Japanese Patent Application Laid-Open (kokai) No. 5-174820) or a mixing method employing a high-shear stirring apparatus (Japanese Patent Application Laid-Open (*kokai*) Nos. 10-162811 and 6-333559). However, such a mixing method is unsatisfactory, in that the vapor grown carbon fiber forms agglomerates and fails to be dispersed throughout the resultant negative electrode.

Meanwhile, a method for forming vapor grown carbon fiber or carbon nano-tubes on the particle surfaces of a negative electrode material has been proposed (Japanese Patent Application Laid-Open (*kokai*) No. 2001-196064). However, this method requires an intricate process, and involves economical problems for mass production.

Therefore, there has been a keen demand for a negative electrode material for producing a lithium ion secondary battery, which has improved large current load enduring characteristic and cycle characteristic by increasing the electroconductivity of the negative electrode material and a method for producing the negative electrode material, which is excellent in production cost and mass production.

### SUMMARY OF THE INVENTION

A first object of the present invention is to provide a negative electrode material for a lithium secondary battery, which is obtained by forming a carbon coating layer exhibiting excellent electrolytic-solution impermeability on the surface of a carbon material by means of a relatively simple method, and which imposes few limitation on an electrolytic solution.

A second object of the present invention is to provide a powdery carbon material which is suitable as a negative electrode material for producing a lithium ion secondary battery, and which enables production of a lithium ion secondary battery exhibiting excellent large current load enduring characteristics and cycle characteristics, without addition of an electrical conductivity-imparting agent to the carbon material serving as a negative electrode active substance; as well as a method for producing such a carbon material.

The present inventors have found that the following procedure can be employed to produce a negative electrode material containing carbonaceous powder and a strong, adhesive coating layer for particles of the powder, the coating layer being formed from heterogeneous carbon having properties different from those of the powder and exhibiting excellent impermeability: a phenol resin monomer containing a drying oil, such as tung oil or linseed oil, or a fatty acid derived from the drying oil -the resin monomer serving as a carbon raw material for forming a coating layer- is applied to the surface of non-graphitized or graphitized carbonaceous powder serving as a matrix (hereinafter the powder may be referred to as a "matrix" or a "matrix carbon material") ; the phenol resin is cured under heating; and, if desired, application steps, impregnation steps, and curing steps are carried out a plurality of times, to thereby form a thick coating layer, followed by firing (or graphitization).

In an attempt to provide a fibrous carbon having excellent electroconductivity on the surface of particles of powdery carbon material serving as a negative electrode material, the present inventors have also found that the following procedure can be employed to produce a powdery carbon material having carbon fiber on particle surfaces thereof: a polymer exhibiting adhesion to a carbonaceous substance is deposited onto at least a portion of surfaces of a carbonaceous particles; fibrous carbon, e.g., vapor grown carbon fiber, is added to and mixed with the resultant powdery carbon material; and the resultant mixture is treated with heat.

Glassy carbon obtained through carbonization of a thermosetting resin, such as a phenol resin or a furfuryl alcohol resin, is known to exhibit excellent electrolytic-solution impermeability. Therefore, such glassy carbon is suitably employed for coating the surface of a carbon material that exhibits high reactivity with an electrolytic solution. In addition, such glassy carbon is easier to handle than is, for example, pitch.

Specifically, a carbon material comprising fibrous carbon on the surface thereof can be produced as follows. That is, a polymer, for example, a phenol resin containing a drying oil, such as tung oil or linseed oil, or a fatty acid derived from the drying oil is deposited onto the particle surfaces of non-graphitized or graphitized carbonaceous powder serving as a matrix; the resultant carbonaceous powder is mixed with fibrous carbon; and the resultant mixture is subjected to heat treatment (e.g., curing under heating or firing or graphitization).

The present invention provides the following.
(1) A carbon material comprising carbon particles having a graphite structure, the particles having a carbonaceous material deposited on at least a portion of the surface thereof, and fibrous carbon having an average interlayer distance (d₀₀₂) of (002) carbon layers as measured through X-ray diffraction of 0.3395 nm or less, wherein the carbonaceous material is obtained by subjecting a composition containing a polymer to heat treatment.
(2) The carbon material as described in (1), wherein the fibrous carbon is deposited to the carbon particles through the carbonaceous material obtained by subjecting the composition containing the polymer to heat treatment.
(3) The carbon material as described in (2), wherein the polymer is at least one species selected from the group consisting of a phenol resin, a polyvinyl alcohol resin, a furan resin, a cellulose resin, a polystyrene resin, a polyimide resin, and an epoxy resin.
(4) The carbon material as described in (2), wherein the composition containing the polymer is a composition containing a drying oil or a fatty acid derived therefrom and a phenol resin.
(5) The carbon material as described in (2), wherein the carbon particles having a graphite structure and/or the carbonaceous material contains boron.
(6) The carbon material as described in (2), wherein the fibrous carbon comprises vapor grown carbon fiber each filament of which has a hollow structure inside thereof and an outer diameter of 2 to 1,000 nm and an aspect ratio of 10 to 15,000.
(7) The carbon material as described in (6), wherein the vapor grown carbon fiber is a branched carbon fiber.
(8) The carbon material as described in (6) or (7), wherein the carbon material contains the vapor grown carbon fiber in an amount of 0.1 to 20 mass% based on the mass of the carbon particles having a graphite structure.
(9) The carbon material as described in (2), wherein the carbon particles having a graphite structure have an average particle diameter of 5 to 70 µm.
(10) The carbon material as described in (9), wherein the carbon particles having a graphite structure are substantially free of carbon particles having an average particle size of 3 µm or less and/or carbon particles having an average particle diameter of 85 µm or more.
(11) The carbon material as described in (1), wherein the coating thickness of the deposited carbonaceous material is 1 to 10,000 nm.
(12) The carbon material as described in (1), wherein the carbonaceous material comprises carbon having an average interlayer distance (d₀₀₂) of (002) carbon layers as measured through X-ray diffraction of at least 0.3395 nm.
(13) The carbon material as described in (1), wherein the carbonaceous material comprises carbon containing elemental boron.
(14) The carbon material as described in (13), wherein the average interlayer distance (d₀₀₂) of (002) carbon layers is 0.3354 to 0.3370 nm.
(15) The carbon material as described in (1), wherein the carbon particles have a specific surface area of 3 m²/g or less, an aspect ratio of 6 or less, and a tap bulk density of at least 0.8 g/cm³.
(16) The carbon material as described in (1), wherein the carbon particles have an average particle diameter of 8 to 30 µm.
(17) The carbon material as described in (1), wherein the carbon particles are substantially free of carbon particles having an average particle size of 3 µm or less and/or carbon particles having an average particle diameter of 53 µm or more.
(18) A method of producing a carbon material as described in (1), comprising the steps of: depositing a composition containing a polymer onto at least a portion of surface of a carbonaceous particles; mixing the carbonaceous particles with fibrous carbon having an average interlayer distance (d₀₀₂) of (002) carbon layers as measured through X-ray diffraction of 0.3395 nm or less to deposit the fibrous carbon to the carbonaceous particles through the composition containing a polymer; and then subjecting the carbonaceous particles to heat treatment in a non-oxidative atmosphere.
(19) The method for producing a carbon material as described in (18), wherein the polymer comprises a polymer having adhesion to carbon.
(20) The method for producing a carbon material as described in (18), wherein the polymer is at least one species selected from the group consisting of a phenol resin, a polyvinyl alcohol resin, a furan resin, a cellulose resin, a polystyrene resin, a polyimide resin, and an epoxy resin.
(21) The method for producing a carbon material as described in (18), wherein the step of subjecting the carbonaceous particles to heat treatment is performed in the presence of an added boron compound.
(22) The method for producing a carbon material as described in (18), wherein the step of subjecting the carbonaceous particles to heat treatment is a firing step performed at a temperature of 2,000°C or more.
(23) The method for producing a carbon material as described in (18), wherein the carbonaceous particles is graphite particles, and wherein the step of subjecting the carbonaceous particles to heat treatment is performed at a temperature of 50 to 2,000°C.
(24) The method for producing a carbon material as described in (18), wherein the fibrous carbon comprises vapor grown carbon fiber each filament of which has a hollow structure inside thereof and an outer diameter of 2 to 1,000 nm and an aspect ratio of 10 to 15,000.
(25) The method for producing a carbon material as described in (24), wherein the vapor grown carbon fiber is a branched carbon fiber.
(26) The method for producing a carbon material as described in (24), wherein the vapor grown carbon fiber is mixed with carbonaceous powder in an amount of 0.1 to 20 mass% based on the mass of the carbonaceous powder.
(27) An electrode paste comprising a carbon material as described in any one of (1) to (17) and a binder.
(28) An electrode comprising an electrode paste as described in (27).
(29) A secondary battery comprising an electrode as described in (28) as a component.
(30) A secondary battery as described in (29), wherein the battery comprises a non-aqueous electrolytic solvent selected from the group consisting of ethylene carbonate, diethyl carbonate, dimethyl carbonate, methyl ethyl carbonate, and propylene carbonate; and a solute.

### BRIEF DESCRIPTION OF THE DRAWINGS

Fig. 1 shows an electron micrograph of a carbon material produced in Example 7 (magnification: 5,000); and
Fig. 2 is a schematic diagram illustrating production of the carbon material of the present invention.

### DETAILED DESCRIPTION OF THE INVENTION

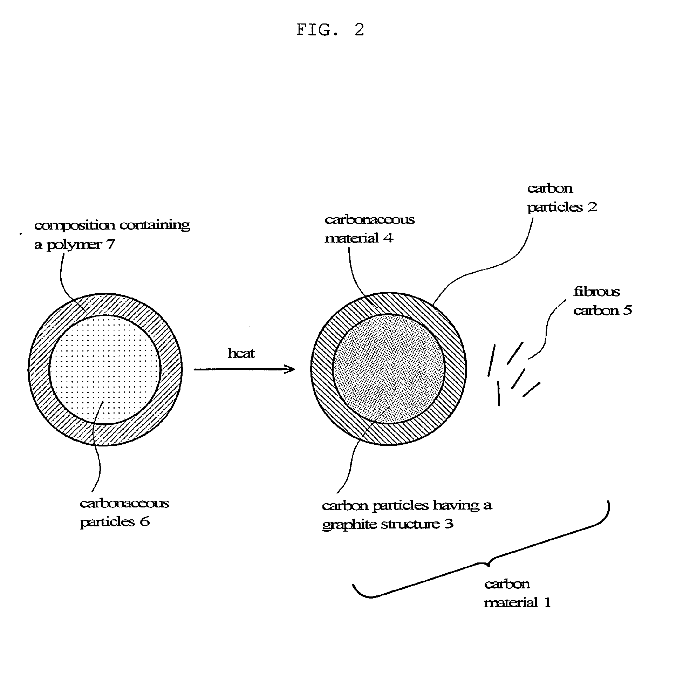

As shown in Fig. 2, the carbon material 1 of the present invention contains carbon particles 2 comprising carbon particles having a graphite structure 3 on at least a portion of surface of which a carbonaceous material 4 is deposited, and fibrous carbon 5. The carbon particles 2 are obtained by depositing a polymer-containing composition 7 onto at least a portion of a surface of carbonaceous particles 6 and then heating the resultant particles. The fibrous carbon 5 is deposited to the carbon particles having a graphite structure 3 through the carbonaceous material 4 or mixed with the carbon particles 2.

Preferred examples of the carbon material of the present invention include a carbon material comprising carbon particles having a graphite structure, the carbon particles being coated with a dense carbon material obtained by subjecting a phenol resin mixed with a drying oil or fatty acid derived from the drying oil to heat treatment, and a carbon material comprising carbon particles having a graphite structure which have deposited thereon fibrous carbon through a carbonaceous material obtained by subjecting a composition containing a polymer to heat treatment.

The present invention will next be described in detail.

### (1) Carbonaceous particles

The "carbonaceous particles" used in producing the carbon material of the present invention refers to carbon particles having a graphite structure or particles that become carbon particles having a graphite structure by heat treatment or the like. The "carbon particles having a graphite structure" refers to those carbon particles which have developed a graphite structure to such an extent that they can be used as a negative electrode active material for a secondary battery. The carbon particles have an average interlayer distance (d₀₀₂) of (002) carbon layers as measured through X-ray diffraction of 0.3395 nm or less, preferably 0.3354 to 0.3370 nm.

Examples of the carbonaceous particles include fired organic compounds, fired natural organic compounds, fired mesocarbon microbeads, fired resins, petroleum-based coke, coal-based coke, natural graphite, and artificial graphite. These may be employed singly or in combination of two or more species.

The carbonaceous particles employed in the present invention may assume, for example, a lump-like shape, a flaky shape, a spherical shape, or a fibrous shape.

As for the particle size distribution of the carbonaceous powder, the central particle size (D50) of the carbonaceous powder as measured by use of a laser-diffraction-based particle size distribution measurement apparatus is preferably about 0.1 to about 100 µm, more preferably 5 to 70 µm. Preferably, the carbonaceous powder has a particle distribution such that it is substantially free of particles having a particle size falling within a range of 3 µm or less and/or 85 µm or more.

When the particle size of the carbonaceous powder is small, the specific surface area of the powder increases, and side reaction accompanying charging/discharging becomes significant, resulting in considerable lowering of charge/discharge efficiency. In contrast, when the particle size of the carbonaceous powder is large, spaces formed between particles become large, and thus packing density is lowered. In addition, since the number of contact points between adjacent particles is reduced, the number of current paths is reduced, resulting in considerable deterioration of large current load enduring characteristics. Meanwhile, a limitation is imposed on the thickness of a negative electrode, since the electrode must be placed in a limited space. However, when the carbonaceous powder having a large particle size is employed, the resultant negative electrode may fail to meet the requirement with respect to thickness. Here, powder refers to a state "a bulk material composed of a number of solid particles in a state where appropriate interactive forces are acting among constituent solid particles".

In order to regulate the particle size, any known technique such as pulverization or classification may be employed. Specific examples of the apparatus employed for pulverization include a hammer mill, a jaw crusher, and an impact mill. The classification may be air classification or classification employing a sieve. Examples of the apparatus employed for air classification include a turbo classifier and a turboplex.

A powdery carbon material serving as a negative electrode active substance is required to exhibit large discharge capacity and high charge/discharge efficiency, which are attained through heating at 2,000°C or higher.

In order to enhance the discharge capacity and high charge/discharge efficiency effectively, a substance which accelerates graphitization, such as boron, is added to the carbon material before heat treatment, to thereby attain high crystallinity of the carbon material.

### (2) Composition containing a polymer

The carbon particles used in the present invention comprise carbon particles having a graphite structure having deposited on a surface thereof a carbonaceous material obtained by subjecting a composition containing a polymer to heat treatment. The carbonaceous material comprises heterogeneous carbonaceous particles having properties different from those of the carbon particles serving as a matrix. As used herein, the expression "heterogeneous carbonaceous" refers to a carbonaceous material having physical properties, e.g., air permeability, penetrability, strength, adhesion, density, crystallinity, and specific surface area, different from those of carbonaceous powder serving as a matrix. That is, there exists no carbonaceous material as a continuous layer that exhibits the same physical properties as those of the matrix.

The polymer employed in the present invention preferably exhibits adhesion to fibrous carbon. When a polymer exhibiting adhesiveness is present between the carbon particles and the fibrous carbon so as to keep these materials in contact with each other without causing separation, these materials are united through chemical bonding by means of covalent bonds, van der Waals forces, or hydrogen bonds, or through physical adhesion attained by diffusion of elements contained in similar substances. Any polymer exhibiting adhesiveness may be employed in the present invention, so long as the polymer, when undergoing mixing, stirring, removal of solvent, or heat treatment, exhibits resistance against, for example, compression, bending, exfoliation, impact, tension, or tearing such that the polymer causes substantially no exfoliation or falling of the fibrous carbon.

For example, the polymer is at least one species selected from the group consisting of a phenol resin, a polyvinyl alcohol resin, a furan resin, a cellulose resin, a polystyrene resin, a polyimide resin, and an epoxy resin. A phenol resin and a polyvinyl resin are preferred. A phenol resin is more preferred.

In the present invention, use of a phenol resin containing a drying oil or a fatty acid derived therefrom, which forms a dense carbonaceous material by heat treatment, is particularly preferable. This is because a drying-oil-modified phenol resin obtained through chemical reaction between the phenol resin and unsaturated bonds of the drying oil is considered to mitigate decomposition and to prevent effervescence during heat treatment (or firing). The drying oil has, in addition to carbon-carbon double bonds, considerably long alkyl groups and ester bonds, and the alkyl groups and ester bonds are considered to relate to, for example, effective removal of gas during firing.

A phenol resin is produced through reaction between a phenol and an aldehyde. Examples of the phenol resin which may be employed include non-modified phenol resins such as novolak and resol; and partially modified phenol resins. If desired, the phenol resin may contain rubber such as nitrile rubber. Examples of the phenol include phenol, cresol, xylenol, and alkyl phenols having an alkyl group of C20 or less.

The phenol resin containing a drying oil or a fatty acid derived therefrom may be prepared through the following method: a method in which firstly a phenol and a drying oil are subjected to addition reaction in the presence of a strong acid catalyst, and subsequently a basic catalyst is added to the resultant reaction mixture such that the mixture exhibits basicity, followed by formalin addition reaction; or a method in which a phenol is reacted with formalin, and then a drying oil is added to the resultant reaction mixture.

Examples of the drying oil include generally known oils such as tung oil, linseed oil, dehydrated castor oil, soybean oil, and cashew nut oil. Fatty acids derived from these drying oils may be employed. When the drying oil (i.e., vegetable oil) is spread so as to form a thin film and then allowed to stand in air, the drying oil is dried and solidified within a relatively short period of time.

The incorporation amount of a drying oil or a fatty acid derived therefrom is preferably 5 to 50 parts by mass on the basis of 100 parts by mass of a phenol resin (e.g., a product obtained through condensation of phenol and formalin). When the amount of a drying oil or a fatty acid derived therefrom exceeds 50 parts by mass, adhesiveness of the resultant polymer is lowered, thereby lowering the density of fibrous carbon. If the amount of a drying oil or a fatty acid derived therefrom becomes less than 5 parts by mass, no dense carbonaceous material can be obtained.

In the case where the aforementioned polymer is deposited onto carbonaceous particles, when the polymer is diluted with a solvent such as acetone, ethanol, or toluene to thereby regulate its viscosity, the resultant polymer is easily deposited onto the carbonaceous particles.

The polymer is just needed to be substantially attached to the outer surface of the carbonaceous particles on at least a portion, preferably on all over the surface thereof regardless of whether it is attached uniformly or non-uniformly.

Deposition of the polymer on the entire surface of the carbonaceous particles, that is, coating the carbonaceous particles with the polymer, can prevent destruction of the graphite structure of carbonaceous particles or decomposition of the electrolytic solution due to the contact of the carbonaceous particles with the electrolytic solution. To achieve this, cracking and exfoliation of a coating material after curing and firing thereof must be prevented, and direct contact between an electrolytic solution and the surface of a dense carbon matrix of high activity must be prevented. Therefore, physical and chemical behaviors of a coating material during curing and firing of the material are very important factors. Removal of gas must proceed smoothly during curing and firing, and no residual passages for gas or micropore after removal of gas must remain. Formation of micropores is considered to relate to chemical effect of preventing drastic decomposition and effervescence during firing, and viscosity of the coating material.

In the present invention, a phenol resin mixed with a drying oil or a fatty acid derived therefrom, which can provide a particularly dense carbonaceous material, can be used as a polymer suitable for coating. By curing (including polymerizing) and firing (graphitizing) it after the coating, a carbon coating layer composed of a dense carbonaceous material can be formed from the polymer.

The incorporation amount of a drying oil or a fatty acid derived therefrom is suitably 5 to 50 parts by mass on the basis of 100 parts by mass of a phenol resin (e.g., a product obtained through condensation of phenol and formalin). When the amount of a drying oil or a fatty acid derived therefrom exceeds 50 parts by mass, the degree of carbonization of a coating material is lowered, thereby lowering the density of the resultant carbon coating layer. When the amount of a drying oil or a fatty acid derived therefrom is less than 5 parts by mass, no dense carbonaceous material can be obtained.

Deposition may be carried out under atmospheric pressure, increased pressure, or reduced pressure. Preferably, deposition is carried out under reduced pressure, since affinity between the carbonaceous powder and the polymer is enhanced.

The incorporation amount of the phenol resin is preferably 2 to 30 mass%, more preferably 4 to 25 mass%, much more preferably 6 to 18 mass%.

### (3) Fibrous carbon

In the present invention, fibrous carbon is used in order to increase electrical conductivity of the carbon material serving as a negative electrode active material. The fibrous carbon is just needed to be contained in the carbon material serving as a negative electrode active material. However, it is preferred that the fibrous carbon be deposited on a surface of carbon particles.

Fibrous carbon to be employed in the present invention is preferably one that exhibits excellent electrical conductivity and has high crystallinity (degree of graphitization). When a negative electrode is formed from the carbon material of the present invention and the resultant electrode is incorporated into a lithium ion secondary battery, it is preferred that the crystal growth direction of carbon fiber to be employed be parallel to the axis of each fiber filament of the fiber and that the fiber filament have branches (branched form) in order to obtain instantaneous current flow throughout the negative electrode.

When the fibrous carbon is deposited on a surface of the carbonaceous particles, minute spaces or passages formed by linking and entanglement between the filaments make the penetration of electrolytic solution easier and form a network among the carbonaceous particles, thereby increasing the electrical conductivity of the resultant carbon material.

Examples of the fibrous carbon which may be employed include pitch-based carbon fiber and vapor grown carbon fiber. Suitably employed is a vapor grown carbon fiber containing carbon crystals grown along the axis of each fiber filament of the fiber, in which each fiber filament has branches.

Vapor grown carbon fiber can be produced by feeding a gasified organic compound into a high-temperature atmosphere together with a transition metal (for example, iron) serving as a catalyst.

The vapor grown carbon fiber to be employed may be as-produced carbon fiber; carbon fiber which has undergone heat treatment at, for example, 800 to 1, 500°C; or carbon fiber which has undergone graphitization at, for example, 2,000 to 3,000°C. However, as-produced carbon fiber or carbon fiber which has undergone heat treatment at about 1,500°C is more preferred.

The vapor grown carbon fiber employed in the present invention is preferably branched carbon fiber. More preferably, each fiber filament of the branched carbon fiber has a hollow structure in which a hollow space extends throughout the filament, including a branched portion thereof. Due to this structure, sheath-forming carbon layers of the filament assume uninterrupted layers. As used herein, the term "hollow structure" refers to a structure such that a plurality of carbon layers form a sheath. The hollow cylindrical structure encompasses a structure such that sheath-forming carbon layers form an incomplete sheath; a structure such that the carbon layers are partially broken; and a structure such that the laminated two carbon layers are formed into a single carbon layer. The cross section of the sheath does not necessarily assume a round shape, and may assume an elliptical shape or a polygonal shape. No particular limitation is imposed on the average interlayer distance (d₀₀₂) of carbon crystal layers. The interlayer distance (d₀₀₂) of the carbon layers as measured through X-ray diffraction is preferably 0.3395 nm or less, more preferably 0.338 nm or less. The thickness (Lc) of the carbon crystal layer in the C axis direction is 40 nm or less.

The outer diameter of each fiber filament of the vapor grown carbon fiber employed in the present invention is 2 to 1, 000 nm, and the aspect ratio of the filament is 10 to 15, 000. Preferably, the fiber filament has an outer diameter of 50 to 500 nm and a length of 1 to 100 µm (i.e., an aspect ratio of 2 to 2,000); or an outer diameter of 2 to 50 nm and a length of 0.5 to 50 µm (i.e., an aspect ratio of 10 to 25,000).

When vapor grown carbon fiber is subj ected to heat treatment at 2, 000°C or higher after the carbon fiber has been produced, the crystallinity of the carbon fiber is further enhanced, thereby increasing the electrical conductivity of the carbon material. In such a case, an effective measure is addition of boron, which promotes graphitization, to the carbon fiber before the heat treatment.

Carrying out heat treatment steps twice or more in the course of production of the powdery carbon material is disadvantageous from the viewpoint of production cost. Therefore, a powdery carbon raw material which has undergone pulverization and classification and non-graphitized vapor grown carbon fiber are bonded together by means of a polymer, and the resultant product is heated at 2, 000°C or higher, to thereby produce the carbon material of the present invention.

### (4) Deposition treatment

In the present invention, the aforementioned carbonaceous powder serving as a matrix is mixed with the aforementioned composition containing a polymer, and the resultant mixture is subjected to stirring. No particular limitation is imposed on the stirring method, and a stirring apparatus such as a ribbon mixer, a screw kneader, a Spartan Ryuzer, a Lodige mixer, a planetary mixer, or a general-purpose mixer may be employed.

When the fibrous carbon is deposited to the carbonaceous particles, the carbonaceous particles to which the polymer has been deposited and the fibrous carbon are mixed and subjected to stirring. So long as a state where the polymer is deposited on at least a portion of surface of the carbonaceous particles and the fibrous carbon is bonded to the carbonaceous particles is obtained, the carbonaceous particles, the composition containing a polymer, and the fibrous carbon may be mixed together. The incorporation amount of fibrous carbon to be deposited, for example, vapor grown carbon fiber, is 0.1 to 20 mass%, preferably 1 to 15 mass%, more preferably 2 to 10 mass%.

The stirring temperature and stirring time are appropriately selected in accordance with, for example, the components and viscosity of the carbonaceous powder and the polymer. The stirring temperature is typically about 0°C to about 50°C, preferably about 10°C to about 30°C. When a phenol resin is used as the polymer, the stirring temperature must be a temperature at which curing (polymerization) of the phenol resin does not proceed drastically.

Stirring may be carried out under atmospheric pressure, increased pressure, or reduced pressure. Preferably, stirring is carried out under reduced pressure, since the affinity between the matrix and the polymer is enhanced.

In order to reduce the viscosity of the aforementioned mixture to 500 Pa · s or less at the mixing temperature, the mixing time is regulated, and the composition is diluted with a solvent. Any solvent may be employed, so long as the solvent exhibits good affinity with the polymer and fibrous carbon. Examples of the solvent include alcohols, ketones, aromatic hydrocarbons, and esters. Preferred examples thereof include methanol, ethanol, butanol, acetone, methyl ethyl ketone, toluene, ethyl acetate, and butyl acetate.

### (5) Removal of solvent and curing

After completion of the stirring, a portion or the entirety of the solvent is preferably removed. Removal of the solvent may be carried out through a known technique such as hot air drying or vacuum drying.

The drying temperature varies with, for example, the boiling point and vapor pressure of the employed solvent. Specifically, the drying temperature is at least 50°C, preferably 100°C to 1, 000°C, more preferably 150°C to 500°C.

When a phenol resin is used as the polymer, preferably the drying temperature is lower than a temperature at which curing (polymerization) of the phenol resin proceeds drastically. Specifically, the drying temperature is 100°C or lower, preferably 80°C or lower.

After the solvent is removed through evaporation, the phenol resin deposited on the surface of the matrix is cured under heating. Heating is carried out at a temperature at which curing of the phenol resin proceeds drastically; i.e., 100°C or higher, preferably 150°C or higher.

Any type of known heating apparatuses may be employed for heating and curing the phenol resin. However, from the viewpoint of productivity, for example, a rotary kiln or a belt-type continuous furnace, which enables continuous treatment, is preferably employed in a production process.

Even with the phenol resin used in the present invention, which can form a dense coating layer (e.g., a coating layer exhibiting a gas permeation rate of 10⁻⁶ cm²/second or less), micropores, caused by generation of gas during heating, may be formed in the resultant layer, and the surface of the matrix may be partially exposed, which is attributed to non-uniform application and impregnation, although the frequency of occurrence of such problems is low as compared with the case where a conventional phenol resin is employed. In such cases, decomposition of an electrolytic solution occurs at a site at which the matrix is insufficiently coated with the coating layer, resulting in lowering of performance.

Such problems can be avoided by carrying out a plurality of times a process including stirring, drying, and curing. In order to enhance affinity between the carbon coating layer and the matrix, to make the thickness of the coating layer uniform, and to increase the thickness of the layer, a coating process including application and impregnation may be carried out a plurality of times. The coating process including application and impregnation is carried out at least twice, preferably at least four times, more preferably at least six times. However, carrying out the coating process more than 20 times is not preferred, from the viewpoints of production cost and performance. In the case where the coating process is performed a plurality of times, at least a portion of the obtained coating layer forms a laminate structure, resulting in an increase in, for example, durability.

When a process including stirring, drying, curing, and firing is carried out repeatedly, satisfactory effects are obtained. However, when the number of repetitions of the firing step is increased, production cost may increase to an unacceptable level.

It should be noted that when a substance having a function of increasing the degree of crystallization, such as boron, in the subsequent heat treatment, good cycle characteristics as obtained by performing a plurality of coating processes could be obtained by only one coating process. This is believed to be attributable to the following mechanism: the carbon atoms on the surface of the carbon coating layer reacts with boron atoms and the boron atoms migrate to the lattice imperfections of carbon on the surface to increase the degree of crystallinity of carbon to assume a graphite structure and at the same time fill the imperfections and the generated chemical structure prevents the decomposition of the electrolytic solution.

The amount of the phenol resin (as reduced to resin solid on the basis of the entire mass of the matrix) to be added during the stirring may be determined in accordance with, for example, the number of repetitions of the application step and the thickness of the coating layer to be required. However, when the amount of the phenol resin is excessively small, intended performance fails to be obtained, whereas when the amount of the phenol resin is excessively large, considerable aggregation of the resin occurs after the curing.

The amount of the phenol resin is preferably 2 to 30 mass%, more preferably 4 to 25 mass%, much more preferably 6 to 18 mass%.

The thickness of the cover by the carbonaceous material after the heat treatment is preferably 1 to 10,000 nm, more preferably 2 to 1,000 nm, still more preferably 10 to 500 nm.

### (6) Heat treatment conditions

In order to increase charge/discharge capacity due to intercalation of, for example, lithium ions, it is desirable that the crystallinity of a carbon material be enhanced. Since the crystallinity of carbon is generally enhanced in accordance with the highest temperature in thermal hysteresis (i.e., the highest heat treatment temperature), in order to enhance performance of a battery, heat treatment is preferably carried out at a higher temperature. The heat treatment temperature is preferably at least 2,000°C, more preferably at least 2, 500°C, much more preferably at least 2, 800°C, still more preferably at least 3,000°C.

Preferably, the carbon material is heated at the highest temperature in thermal hysteresis for a long period of time. However, since the carbon material to be heated is in the form of very small particles, when thermal conduction reaches the center of each particle, basically, the carbon material exhibits sufficient performance. From the viewpoint of production cost, the carbon material is preferably heated for a short period of time. When carbonaceous powder having an average particle size of about 20 µm is heated, after the temperature of the center of the powder reaches the maximum temperature, the powder is maintained at the maximum temperature for at least 5 minutes, preferably at least 10 minutes, more preferably at least 30 minutes.

When a composition containing the polymer is deposited onto a carbonaceous powder (matrix) of high carbon crystallinity, such as natural graphite or artificial graphite which has undergone heat treatment, after deposition of the composition, the composition (i.e., deposition material) per *se* is required to undergo a certain level of heat treatment. In this case, the center of the matrix is not necessarily heated to the maximum temperature, so long as adhesion of the coating layer to the surface of a carbon material and strength of the coating layer reach a substantially practical level. More particularly, the heat treatment is carried out at 50 to 2, 000°C, preferably at 80 to 1, 500°C, more preferably at 100 to 1, 200°C.

When a matrix of relatively low carbon crystallinity is employed, heat treatment is carried out at 2, 000°C or higher, preferably at 2, 400°C or higher, more preferably at 2, 700°C or higher, much more preferably at 2, 900°C or higher in order to enhance the carbon crystallinity of the matrix.

The coating after the heat treatment has an average interlayer distance (d₀₀₂) of (002) carbon layers as measured through X-ray diffraction of 0.3395 nm or less. The average interlayer distance of the coating can be made 0.3395 nm or less, preferably 0.3354 to 0.3370 nm by addition of a substance having a function of promoting graphitization, such as boron.

In the case where the matrix is subjected to heat treatment by use of a known heating apparatus, when the temperature increasing rate falls within a range of the maximum temperature increasing rate and the minimum temperature increasing rate in the apparatus, the performance of the matrix is not considerably affected. However, since the matrix assumes the form of powder and are free of problems such as cracking as would occur in, for example, a molded material, the temperature increasing rate is preferably high also from the viewpoint of production cost. The time elapsed when the matrix is heated from ambient temperature to the maximum temperature is preferably 12 hours or less, more preferably six hours or less, much more preferably two hours or less.

Any known heat treatment apparatus, such as an Acheson furnace or a direct electrical heating furnace, may be employed. Such an apparatus is advantageous from the viewpoint of production cost. However, preferably, a furnace having a structure such that the interior of the furnace can be filled with an inert gas such as argon or helium is employed, since the resistance of the carbonaceous powder may be lowered in the presence of nitrogen gas, and the strength of the carbon material may be lowered through oxidation by oxygen. Preferred examples of such a furnace include a batch furnace whose interior enables evacuation and gas substitution, a batch furnace in which the interior atmosphere can be controlled by means of a tubular furnace, and a continuous furnace.

In order to enhance the crystallinity of the carbon material, if desired, any known graphitization catalyst, such as boron, beryllium, aluminum, or silicon, may be employed.

In a graphite network crystal structure, carbon atoms can be substituted by boron atoms. When such substitution occurs, restructuring of a crystal structure is considered to occur; i.e., a carbon-carbon bond is cleaved, and then reconstituted. Therefore, when graphite particles of relatively poor crystallinity are subjected to such restructuring, the resultant particles may exhibit high crystallinity. The expression "the carbon coating layer contains boron (elemental boron)" refers to the case where a portion of incorporated boron forms a solid solution and is present in the surface of the carbon layer or between carbon-atom-layers of hexagonal network structure; or the case where carbon atoms are partially substituted by boron atoms.

No particular limitation is imposed on the boron compound which may be employed, so long as the boron compound generates boron through heating. Examples of the boron compound which may be employed include boron, boron carbide, boron oxide, and organic boron oxide. The boron compound may assume a solid, liquid, or gaseous form. Specific examples include elemental boron, boric acid (H₃BO₃), boric acid salts, boron oxide (B₂O₃), boron carbide (B₄C), and BN.

No particular limitation is imposed on the amount of a boron compound to be incorporated, which depends on chemical properties and physical properties of the compound. For example, when boron carbide (B₄C) is employed, it is preferably incorporated into the carbonaceous powder to be heated in an amount of 0.05 to 10 mass%, more preferably 0.1 to 5 mass%.

When the particle size of the carbonaceous powder is regulated before heat treatment, the particle size of the carbon material is not necessarily regulated after heat treatment. However, when the carbon material has undergone fusion or aggregation, the material may be subjected to pulverization to some extent, and then to air classification. Classification is preferably carried out through sieving by use of a meshed sieve, since operation is simple.

The average particle size of the carbon particles after the heat treatment is preferably 5 to 70 µm, more preferably 8 to 30 µm, still more preferably 10 to 25 µm. The average particle size is measured through a laser diffraction-scattering method. When the average particle size is smaller than 5 µm, aspect ratio tends to become large, and specific surface area tends to become large. For example, when a battery electrode is produced, in general, the carbon material is mixed with a binder to form a paste, and the resultant paste is applied to the electrode. When the average particle size of the carbon material is smaller than 5 µm, the carbon material contains large amounts of fine particles having a size smaller than 5 µm. Therefore, the viscosity of the paste is increased, and applicability of the paste is lowered.

When the carbon material contains large particles having an average size of 85 µm or more, large amounts of irregularities are formed on the surface of the resultant electrode, thereby causing generation of scratches on a separator to be employed in a battery. When the carbon material contains substantially no particles having an average size falling within a range of 3 µm or less and 85 µm or more; i.e., when the carbon material contains such particles in an amount of 5 mass% or less, the average particle size of the material is 8 to 30 µm. Preferably, the carbon material contains substantially no particles having an average size falling within a range of 3 µm or less and 53 µm or more; i.e., when the carbon material contains such particles in an amount of 5 mass% or less, the average particle size of the material is 10 to 25 µm.

### (7) Production of secondary battery

Any known method may be employed for producing a lithium secondary battery from the carbon material of the present invention.

A lithium battery electrode is preferably formed from a carbon material having a small specific surface area. The carbon material of the present invention has a specific surface area of 3 m²/g or less as measured through a BET method. When the specific surface area exceeds 3 m²/g, the surface activity of the carbon material is increased, and the coulomb efficiency of the battery is lowered as a result of, for example, the decomposition of the electrolytic solution. In order to increase the capacity of a battery, the packing density of the carbon material must be increased. In order to increase the packing density, the carbon material preferably assumes a virtually spherical shape. When the shape of each particle of the carbon material is represented by aspect ratio (i.e., the length of the major axis/the length of the minor axis), the aspect ratio is 6 or less, preferably 5 or less. The aspect ratio may be obtained by use of, for example, a micrograph of the carbon material. Alternatively, the aspect ratio may be calculated through the following procedure: the average particle size (A) of the carbon material is measured through a laser diffraction-scattering method; the average particle size (B) of the carbon material is measured through an electrical detection method (a Coulter counter method); each particle of the carbon material is regarded as a disk, with the bottom diameter of the disk being represented by (A) ; the volume (C) of the disk is calculated from the formula: C = 4/3 × (B/2) ³π; the thickness (T) of the disk is calculated from the formula: T = C/(A/2)²π; and the aspect ratio is calculated as A/T.

When a lithium battery electrode is formed from a carbon material exhibiting good fillability and having high bulk density, the electrode exhibits high discharge capacity. The carbon material of the present invention has a tap bulk density of at least 0.8 g/cm³, preferably at least 0.9 g/cm³. The tap bulk density is measured through the following procedure: a predetermined mass of the carbon material (6.0 g) is placed in a measurement cell having a size of 15 mmφ; the cell is placed in a tapping apparatus; the cell is allowed to fall freely 400 times under the following conditions: height of fall: 46 mm, tapping rate: 2 seconds/time; the volume of the carbon material is measured after completion of the 400 repetitions of free fall; and the bulk density of the carbon material is calculated by use of the above-measured mass and volume.

The production methods of electrode paste and electrode of the present invention are not limited particularly and known production methods therefor may be used. The production method for electrode is suitably performed as follows: the carbon material, an organic binder and a solvent therefor are kneaded, preferably together with powder of an electrical conductivity imparting agent (electrically conductive substance), to form a paste-like mixture and the resultant electrode paste is applied to an electrically conductive substrate by, for example, spraying, spin-coating, blade-coating, electrostatic spraying, screen printing, or coating. Among these application methods, spin coating, blade coating, screen-printing and coating are preferable.

The binder is not limited particularly so far as it is compatible with the carbon material of the present invention. Examples of the binder which may be employed include known binders, such as fluorine-based polymers (e.g., polyvinylidene fluoride and polytetrafluoroethylene), and rubbers (e.g., SBR (styrene-butadiene rubber)).

Any known solvent suitable for a binder to be used may be employed so far as it is compatible with the carbon material of the present invention. When a fluorine-based polymer is employed as a binder, for example, toluene or N-methylpyrrolidone is employed as a solvent. When SBR is employed as a binder, for example, water is employed as a solvent.

The amount of the binder to be employed is preferably 1 to 30 parts by mass, more preferably about 3 to about 20 parts by mass, on the basis of 100 parts by mass of the negative electrode carbon material.

Kneading of the negative electrode material with the binder may be carried out by use of any known apparatus such as a ribbon mixer, a screw kneader, a Spartan Ryuzer, a Lodige mixer, a planetary mixer, or a general-purpose mixer.

The carbon material of the present invention can be imparted more electrical conductivity by mixing fibrous carbon therewith. As the fibrous carbon may be used those described above and the mixing amount thereof is preferably 0.1 to 20 mass% based on the mass of carbon particles.

In addition to the components used in the electrode paste of the present invention listed above, other components may also be used so far as they do not harm the object of the present invention. For example, addition of various inorganic fine particles improves viscosity control/solvent maintenance/thermal stability, there by improving the durability, safety and reliability of the battery. In some cases, conversely, the conductivity and mobility of ions may increase due to interactions of the inorganic fine particles with the electrolyte salts and polymer.

The inorganic fine particles to be used is preferably selected from those which are electrically non-conductive and electrochemically stable. It is more preferable that the inorganic fine particles are ion conductive. Specifically examples of preferred inorganic fine particles include fine particles of ion conductive or electrically non-conductive ceramics, such as α-, β-, and γ-alumina, and silica.

From the standpoint of improvement of retention of electrolytic solution by the composite electrolyte and of the strength of the composite electrolyte in the case of a solid system, the inorganic fine particles are preferably those which have a secondary particle structure formed by aggregation of primary particles. Specific examples of the inorganic fine particles having such a structure include silica ultrafine particles such as aerosil (Nippon Aerosil Co., Ltd.), and alumina ultrafine particles. In consideration of stability and complexing efficiency, alumina ultrafine particles are more preferred. It is preferred that the specific surface area of the inorganic fine particles be as large as possible and is preferably at least 5 m²/g, more preferably at least 50 m²/g, according to the BET method. The size of such inorganic fine particles in terms of average particle diameter is preferably 0.01 to 100 µm, more preferably 0.01 to 20 µm. If the incorporation amount of the inorganic fine particles is too large, problems such as an increase in the resistance, an increase in viscosity, a reduction in strength of electrode will occur. Therefore, the incorporation amount of the inorganic fine particles is preferably about 30 mass% or less, more preferably in a range of about 0.1 to about 20 mass%.

Examples of the electrically conductive substrate (collector) which may be employed include known materials such as copper, aluminum, stainless steel, nickel, and alloys thereof.

Any known separator may be employed. A separator that is optionally placed between electrodes is only required to be a microporous separator that can permeate ions. Examples of microporous separator that can be used preferably include microporous polyethylene film, microporous polypropylene film, polyethylene- or polypropylene-made nonwoven fabric, glass fiber mixed nonwoven fabric, and glass matte filter. Polyethylene- and polypropylene-made nonwoven fabrics are particularly preferred.

In the lithium secondary battery of the present invention, the electrolytic solution may be a known organic electrolytic solution, and the electrolyte may be a known inorganic solid electrolyte or polymer solid electrolyte. From the viewpoint of electrical conductivity, an organic electrolytic solution is preferred.

Preferred examples of the organic solvent employed for preparing the organic electrolytic solution include ethers such as diethyl ether, dibutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol dimethyl ether, and ethylene glycol phenyl ether; amides such as formamide, N-methylformamide, N,N-dimethylformamide, N-ethylformamide, N,N-diethylformamide, N-methylacetamide, N,N-dimethylacetamide, N-ethylacetamide, N,N-diethylacetamide, N,N-dimethylpropionamide, and hexamethylphosphoryl amide; sulfur-containing compounds such as dimethyl sulfoxide and sulfolane; dialkyl ketones such as methyl ethyl ketone and methyl isobutyl ketone; cyclic ethers such as ethylene oxide, propylene oxide, tetrahydrofuran, 2-methoxytetrahydrofuran, 1,2-dimethoxyethane, 1,2-diethoxyethane, 1,2-dibutoxyethane, and 1,3-dioxolane; carbonates such as ethylene carbonate and propylene carbonate; γ-butyrolactone; N-methylpyrrolidone; acetonitrile; and nitromethane. More preferred examples include esters such as ethylene carbonate, butylene carbonate, diethyl carbonate, dimethyl carbonate, methyl ethyl carbonate, propylene carbonate, vinylene carbonate, γ-butyrolactone, γ-valerolactone, and y-octanolactone; ethers such as dioxolane, diethyl ether, and diethoxyethane; dimethyl sulfoxide; acetonitrile; and tetrahydrofuran. Particularly, carbonate-based non-aqueous solvents such as ethylene carbonate and propylene carbonate are preferably employed. These solvents may be employed singly or in combination of two or more species.

A lithium salt is employed as a solute (electrolyte) which is dissolved in the aforementioned solvent. Examples of generally known lithium salts include LiClO₄, LiBF₄, LiPF₆, LiAlCl₄, LiSbF₆, LiSCN, LiCl, LiCF₃SO₃, LiCF₃CO₂, and LiN(CF₃SO₂)₂.

Examples of the polymer solid electrolyte include polyethylene oxide derivatives and polymers containing the derivatives, polypropylene oxide derivatives and polymers containing the derivatives, phosphoric acid ester polymers, and polycarbonate derivatives and polymers containing the derivatives.

In a lithium secondary battery containing the negative electrode material of the present invention, when a lithium-containing transition metal oxide (chemical formula: LiₓMO₂, wherein M represents at least one transition metal selected from among Co, Ni, Mn, and Fe; and X falls within the following range: 0 ≤ X ≤ 1.2) is employed as a positive electrode active substance, the resultant lithium secondary battery exhibits excellent safety and highly efficient charge/discharge characteristics. The positive electrode active substance is particularly preferably LiₓCoO₂, LiₓNiO₂, LiₓMn₂O₄, and compounds obtained by partially substituting Co atoms, Ni atoms, and Mn atoms of the above compounds with other elements such as transition metals.

No particular limitation is imposed on the elements (exclusive of the aforementioned elements) which are required for producing a battery.

### BEST MODE FOR CARRYING OUT THE INVENTIONS

The present invention will next be described in more detail by way of Examples,

### Method for preparing phenol resin for coating

A phenol resin which had been partially modified by use of tung oil was employed as a coating material. Tung oil (100 parts by mass), phenol (150 parts by mass), and nonylphenol (150 parts by mass) were mixed together, and the resultant mixture was maintained at 50°C. Sulfuric acid (0.5 parts by mass) was added to the mixture, and the resultant mixture was stirred, gradually heated, and maintained at 120°C for one hour, to thereby allow addition reaction between the tung oil and the phenols to proceed. Subsequently, the temperature of the resultant reaction mixture was lowered to 60°C or lower, and hexamethylenetetramine (6 parts by mass) and 37 mass% formalin (100 parts by mass) were added to the mixture. The resultant mixture was subjected to reaction at 90°C for about two hours, and then the resultant reaction mixture was subjected to dehydration under vacuum. Thereafter, the resultant mixture was diluted with methanol (100 parts by mass) and acetone (100 parts by mass), to thereby yield a varnish having a viscosity of 20 mPa · s (at 20°C). Hereinafter, the varnish will be called "varnish A."

### Method for measuring average interlayer distance (d₀₀₂) through X-ray diffraction

Raw material varnish A was heated on a hot plate at 150°C to evaporate the solvent. Then, the dried varnish was scraped off from the hot plate and pulverized by means of a ball mill for four hours, followed by heating again on a hot plate at 300°C in order to allow curing to proceed sufficiently. Subsequently the thus-cured varnish powder was placed in a graphite crucible and graphitization was performed at 2, 900°C. In the case of the boron-added varnish powder, B₄C (4 mass%) was added in this stage and graphitization was performed at 2, 900°C. After the graphitization, measurement of XRD (X-ray diffraction) of the graphitized products was performed according to the JSPS (Japan Society for the Promotion of Science) method specified by The Carbon Society of Japan, 117 Committee (Carbon, No. 36, pp. 25-34 (1963)) and an average interlayer distance (d₀₀₂) of (002) carbon layers was calculated from the results of XRD measurements.

### Battery evaluation method

### (1) Preparation of paste

KF Polymer L1320 (an N-methylpyrrolidone (NMP) solution product containing polyvinylidene fluoride resin (PVDF) (12 mass%), product of Kureha Chemical Industry Co., Ltd.) (0.1 parts by mass) was added to a carbon raw material (1 part by mass), and the resultant mixture was kneaded by use of a planetary mixer, to thereby prepare a neat agent.

### (2) Formation of electrode

NMP was added to the neat agent so as to regulate the viscosity of the agent. The resultant mixture was applied onto a copper foil (1) of high purity by use of a doctor blade so as to attain a thickness of 140 µm in Examples 1 to 6 and Comparative Examples 1 to 9, or a thickness of 250 µm in Examples 7 to 9 and Comparative Examples 10 to 13. The resultant product was dried under vacuum at 120°C for two hours in Examples 1 to 6 and Comparative Examples 1 to 9, and at 120°C for 1 hour in Examples 7 to 9 and Comparative Examples 10 to 13, and then subjected to punching, to thereby form an electrode having a size of 18 mmφ. The thus-formed electrode was sandwiched between super-steel-made pressing plates, and then subjected to pressing such that a pressure of 1 × 10³ to 10 × 10³ kg/cm² (120 µm thick) in Examples 7 to 9 and Comparative Examples 10 to 13 or a pressure of 1 × 10³ to 3 × 10³ kg/cm² (120 µm thick) in Examples 7 to 9 and Comparative Examples 10 to 13 was applied to the electrode.

Thereafter, the resultant electrode was dried in a vacuum drying apparatus at 120°C for 12 hours, and was employed for evaluation.

### (3) Production of battery

A three-electrode cell was produced as follows. The below-described procedure was carried out in an atmosphere of dried argon having a dew point of -80°C or lower.

In a polypropylene-made cell (inner diameter: about 18 mm) having a screw cap, a separator (polypropylene-made microporous film (Celgard 2400)) was sandwiched between the carbon electrode with copper foil (positive electrode) which had been formed above in (2), and a metallic lithium foil (negative electrode), to thereby form a laminate. Subsequently, a separator (polypropylene-made microporous film (Celgard 2400)) was formed on the negative electrode, and then a metallic lithium foil serving as a reference electrode was formed on the separator. Thereafter, an electrolytic solution was added to the cell, and the resultant cell was employed for testing.

### (4) Electrolytic solution

The below-described four types of electrolytic solvents were employed for preparing electrolytic solutions.
· EC 1 : a mixture of EC (ethylene carbonate) (8 parts by mass) and DEC (diethyl carbonate) (12 parts by mass).
· EC 2 : a mixture of EC (ethylene carbonate) (19 parts by mass) and DEC (diethyl carbonate) (31 parts by mass).
· PC 1 (PC concentration: about 30%) : a mixture of PC (2 parts by mass), EC (2 parts by mass), and DEC (3 parts by mass).
· PC 2 (PC concentration: about 10%) : a mixture of PC (1 part by mass), EC (4 parts by mass), and DEC (4 parts by mass).

LiPF₆ (1 mol/liter) serving as an electrolyte was dissolved in each of the above solvents, to thereby prepare an electrolytic solution.

### (5) Charge/discharge test

Constant-current charge/discharge test was performed at a current density of 0.2 mA/cm² (corresponding to 0.1 C).

Constant-current (CC) charging (i.e., intercalation of lithium ions into carbon) was performed at 0.2 mA/cm² while voltage was increased from rest potential to 0.002 V. Subsequently, constant-voltage (CV) charging was performed at 0.002 V, and charging was stopped when the current value decreased to 25.4 µA.

CC discharging (i.e., release of lithium ions from carbon) was performed at 0.2 mA/cm² (corresponding to 0.1 C), and was cut off at a voltage of 1.5 V.

### EXAMPLE 1

Ethanol (12.6 parts by mass) was added to varnish A (5.4 parts by mass as reduced to resin solid), and the resultant mixture was stirred, to thereby completely dissolve the varnish A in the ethanol. Lump-shaped natural graphite (d₀₀₂ = 0.3359 nm, D50 = 20 µm) (20 parts by mass) was added to the resultant solution, and the thus-formed mixture was stirred for 30 minutes by use of a planetary mixer. The resultant mixture was dried in a vacuum drying apparatus at 80°C for two hours, to thereby remove the ethanol. Subsequently, the thus-dried powder was placed onto a hot plate, the powder was heated from room temperature to 150°C over 30 minutes, and the resultant powder was maintained at 150°C for three hours, to thereby cure the varnish. The resultant powder was subjected to pulverization for 30 seconds by use of a Henschel mixer.

The thus-pulverized powder was placed in a graphite crucible, and the crucible was placed in a graphite furnace. The interior of the furnace was evacuated, and then filled with argon. Subsequently, the furnace was heated under argon gas stream. The temperature of the furnace was maintained at 2, 900°C for 10 minutes, and then the furnace was cooled to room temperature. Thereafter, the resultant graphite powder was subjected to vibration sieving by use of a 45-µm mesh, and the thus-sieved product was employed as a negative electrode material sample. The carbonaceous material (coating carbon) in the carbon material had d₀₀₂ of at least 0.3395 nm. The EC 1 electrolytic solution was employed for battery evaluation.

### Example 2

The sample of Example 1 was subjected to evaluation by use of the PC 1 electrolytic solution.

### Example 3

### First coating

Ethanol (12.6 parts by mass) was added to varnish A (5.4 parts by mass as reduced to resin solid), and the resultant mixture was stirred, to thereby completely dissolve the varnish A in the ethanol. Lump-shaped natural graphite (d₀₀₂ = 0.3359 nm, D50 = 20 µm) (20 parts by mass) was added to the resultant solution, and the thus-formed mixture was stirred for 30 minutes by use of a planetary mixer. The resultant mixture was dried in a vacuum drying apparatus at 80°C for two hours, to thereby remove the ethanol. Subsequently, the thus-dried powder was placed onto a hot plate, the powder was heated from room temperature to 150°C over 30 minutes, and the resultant powder was maintained at 150°C for three hours, to thereby cure the varnish. The resultant powder was subjected to pulverization for 30 seconds by use of a Henschel mixer.

### Second coating

Ethanol (12.6 parts by mass) was added to varnish A (5.4 parts by mass as reduced to resin solid), and the resultant mixture was stirred. To the resultant mixture was added the above-pulverized powder (25. 4 parts by mass; i.e., matrix (20 parts by mass) + cured varnish A (5.4 parts by mass)), and the thus-formed mixture was stirred for 30 minutes by use of a planetary mixer. The resultant mixture was dried in a vacuum drying apparatus at 80°C for two hours, to thereby remove the ethanol. Subsequently, the thus-dried powder was placed onto a hot plate, the powder was heated from room temperature to 150°C over 30 minutes, and the resultant powder was maintained at 150°C for three hours, to thereby cure the varnish. The cured powder was pulverized by means of a Henschel mixer for 30 seconds.

The above-described procedure was repeated to thereby carry out third, fourth, and fifth coatings.

The thus-obtained powder was placed in a graphite crucible, and the crucible was placed in a graphite furnace. The interior of the furnace was evacuated, and then filled with argon. Subsequently, the furnace was heated under argon gas stream. The temperature of the furnace was maintained at 2, 900°C for 10 minutes, and then the furnace was cooled to room temperature. Thereafter, the resultant graphite powder was subjected to vibration sieving by use of a 45-µm mesh, and the thus-sieved product was employed as a negative electrode material sample. The carbonaceous material (coating carbon) in the carbon material had d₀₀₂ of at least 0.3395 nm. The PC 1 electrolytic solution was employed for battery evaluation.

### Example 4

Ethanol (12.6 parts by mass) was added to varnish A (5.4 parts by mass as reduced to resin solid), and the resultant mixture was stirred, to thereby completely dissolve the varnish A in the ethanol. Lump-shaped natural graphite (d₀₀₂ = 0.3359 nm, D50 = 20 µm) (20 parts by mass) was added to the resultant solution, and the thus-formed mixture was stirred for 30 minutes by use of a planetary mixer. The resultant mixture was dried in a vacuum drying apparatus at 80°C for two hours, to thereby remove the ethanol. Subsequently, the thus-dried powder was placed onto a hot plate, the powder was heated from room temperature to 150°C over 30 minutes, and the resultant powder was maintained at 150°C for three hours, to thereby cure the varnish. The resultant powder was subjected to pulverization for 30 seconds by use of a Henschel mixer.

The thus-pulverized powder and boron carbide (B₄C) powder (1 part by mass) were placed in a graphite crucible, and the crucible was placed in a graphite furnace. The interior of the furnace was evacuated, and then filled with argon. Subsequently, the furnace was heated under argon gas stream. The temperature of the furnace was maintained at 2, 900°C for 10 minutes, and then the furnace was cooled to room temperature. Thereafter, the resultant graphite powder was subjected to vibration sieving by use of a 45-µm mesh, and the thus-sieved product was employed as a negative electrode material sample. The carbonaceous material (coating carbon) in the carbon material had d₀₀₂ of 0.3355 nm. The EC 1 electrolytic solution was employed for battery evaluation.

### Example 5

The negative electrode material sample of Example 4 was subjected to battery evaluation by use of the PC 1 electrolytic solution.

### Example 6

The negative electrode material sample of Example 1 was subjected to battery evaluation by use of the PC 2 electrolytic solution.

### Comparative Example 1

The lump-shaped natural graphite employed in Example 1 as a raw material (the particle size of the graphite had been regulated) was subjected to battery evaluation by use of the EC 1 electrolytic solution.

### Comparative Example 2

The sample of Comparative Example 1 was subj ected to battery evaluation by use of the PC 1 electrolytic solution.

### Comparative Example 3

The procedure of Example 1 was repeated, except that the varnish A was replaced by phenol resin BRS727 (special modified varnish, product of Showa Highpolymer Co., Ltd., viscosity: 90 to 150 mPa · s, non-volatile content: 49 to 53%), to thereby prepare a negative electrode material sample. The sample was subjected to battery evaluation by use of the PC 1 electrolytic solution.

### Comparative Example 4

The procedure of Example 3 was repeated, except that the varnish A was replaced by phenol resin BRS727 (product of Showa Highpolymer Co., Ltd.), to thereby prepare a negative electrode material sample. The sample was subjected to battery evaluation by use of the PC 1 electrolytic solution.

### Comparative Example 5

The procedure of Comparative Example 3 was repeated, except that BLS727 was replaced by phenol resin BLS722 (product of Showa Highpolymer Co., Ltd., viscosity: 400 to 900 mP · s, non-volatile content: 49 to 55%), to thereby prepare a negative electrode material sample. The sample was subjected to battery evaluation by use of the PC 1 electrolytic solution.

### Comparative Example 6

The procedure of Comparative Example 3 was repeated, except that BLS727 was replaced by phenol resin BLS120Z (water-soluble resol, product of Showa Highpolymer Co., Ltd., viscosity: 150 to 250 mP · s, non-volatile content: 68 to 72%), to thereby prepare a negative electrode material sample. The sample was subjected to battery evaluation by use of the PC 1 electrolytic solution.

### Comparative Example 7

The sample of Comparative Example 3 was subjected to battery evaluation by use of the PC 2 electrolytic solution.

### Comparative Example 8

The sample of Comparative Example 5 was subjected to battery evaluation by use of the PC 2 electrolytic solution.

### Comparative Example 9

The sample of Comparative Example 6 was subjected to battery evaluation by use of the PC 2 electrolytic solution.

Table 1 shows the battery evaluation results of the samples of the Examples 1 to 6 and Comparative Examples 1 to 9.

**[Table 1]**

| | Coating Resin | Number of coatings | Resin concentration | B concentration | Electrolytic solution | Charging | Discharging | Efficiency | Irreversible |
|---|---|---|---|---|---|---|---|---|---|
| | | Time | Mass% | Mass% | Type | mAh/g | mAh/g | % | mAh/g |
| Example 1 | Varnish A | 1 | 8 | 0 | EC 1 | 380 | 356 | 93.7 | 24 |
| Example 2 | Varnish A | 1 | 8 | 0 | PC 1 | 705 | 2 | 0.2 | 704 |
| Example 3 | Varnish A | 5 | 8 | 0 | PC 1 | 373 | 340 | 91.4 | 32 |
| Example 4 | Varnish A | 1 | 8 | 4 | EC 1 | 368 | 332 | 90.0 | 37 |
| Example 5 | Varnish A | 1 | 8 | 4 | PC 1 | 368 | 331 | 89.8 | 38 |
| Example 6 | Varnish A | 1 | 8 | 0 | PC 2 | 428 | 350 | 81.8 | 78 |
| Comp. Ex. 1 | None | 0 | 0 | 0 | EC 1 | 389 | 357 | 91.6 | 33 |
| Comp. Ex. 2 | None | 0 | 0 | 0 | PC 1 | 717 | 3 | 0.4 | 714 |
| Comp. Ex. 3 | BRS727 | 1 | 8 | 0 | PC 1 | 698 | 2 | 0.2 | 696 |
| Comp. Ex. 4 | BRS727 | 5 | 8 | 0 | PC 1 | 596 | 326 | 54.6 | 271 |
| Comp. Ex. 5 | BLS722 | 1 | 8 | 0 | PC 1 | 702 | 2 | 0.2 | 700 |
| Comp. Ex. 6 | BLS120Z | 1 | 8 | 0 | PC 1 | 687 | 2 | 0.2 | 685 |
| Comp. Ex. 7 | BRS727 | 1 | 8 | 0 | PC 2 | 448 | 348 | 77.7 | 100 |
| Comp. Ex. 8 | BLS722 | 1 | 8 | 0 | PC 2 | 472 | 341 | 72.4 | 130 |
| Comp. Ex. 9 | BLS120Z | 1 | 8 | 0 | PC 2 | 432 | 346 | 80.0 | 86 |

### Example 7

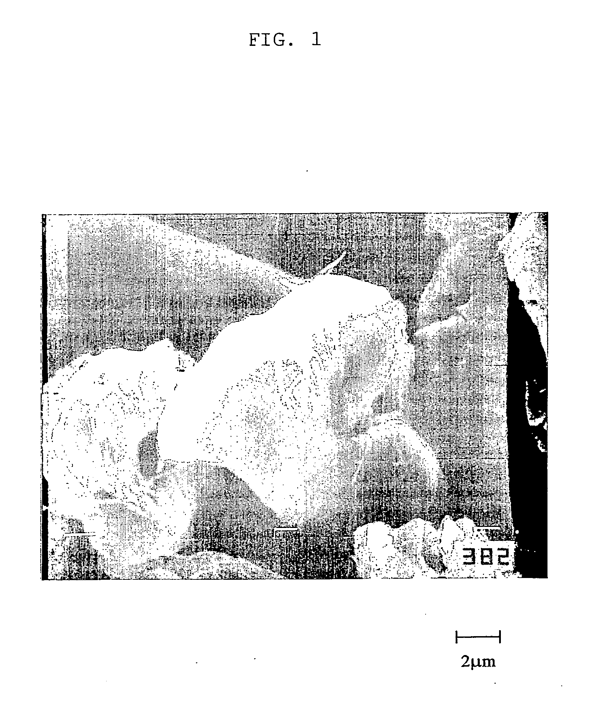

Petroleum-based coke was subjected to pulverization and classification, to thereby prepare a carbonaceous powder having an average particle size D50 of 20 µm. The thus-prepared carbonaceous powder (19.8 g) was mixed with boron carbide (0.2 g). Separately, ethanol (12.6 parts by mass) was added to varnish A (5. 4 parts by mass as reduced to resin solid), and the resultant mixture was stirred, to thereby completely dissolve the varnish A in the ethanol. The resultant solution was added to the above-prepared mixture such that the concentration of the modified phenol resin solid became 1.3 mass%, and the thus-formed mixture was kneaded for 30 minutes by use of a planetary mixer. Vapor grown carbon fiber (average diameter, 150 nm; average fiber length, 20 µm; average interlayer distance d₀₀₂, 0.3388 nm) (10 mass%) which had undergone graphitization at 2,800°C was added to the resultant mixture, and the thus-formed mixture was kneaded. The kneaded mixture was dried in a vacuum drying apparatus at 80°C for two hours, to thereby remove the ethanol. Subsequently, the thus-dried product was placed in a heating furnace, and the interior of the furnace was evacuated and then filled with argon. Subsequently, the furnace was heated under a stream of argon gas. The temperature of the furnace was maintained at 2, 900°C for 10 minutes, and then the furnace was cooled to room temperature. Thereafter, the thus-heat-treated product was applied to a sieve of 63-µm mesh, to thereby yield the powdery carbon material of the present invention. When the thus-obtained carbon material was observed under an electron microscope (SEM), the carbonaceous powder was found to have fibrous carbon (i.e., the vapor grown carbon fiber) on the particle surfaces of the powder as shown in Fig. 1. The powdery carbon material was subjected to battery evaluation by use of a single-cell-type battery evaluation apparatus. The EC 1 electrolytic solution was employed for battery evaluation. Battery characteristics under a load of a large current (0.1 C or 1.0 C) were evaluated. The results are shown in Table 2.

### Example 8

Petroleum-based coke was subjected to pulverization and classification, to thereby prepare a carbonaceous powder having an average particle size D50 of 20 µm. The thus-prepared carbonaceous powder (19.8 g) was mixed with boron carbide (0.2 g). Separately, ethanol (12.6 parts by mass) was added to varnish A (5.4 parts by mass as reduced to resin solid), and the resultant mixture was stirred, to thereby completely dissolve the varnish A in the ethanol. The resultant solution was added to the above-prepared mixture such that the concentration of the modified phenol resin solid became 1.3 mass%, and the thus-formed mixture was kneaded for 30 minutes by use of a planetary mixer. Non-graphitized vapor grown carbon fiber (10 mass%) which had undergone heat treatment at 1, 000°C was added to the resultant mixture, and the thus-formed mixture was kneaded. Subsequently, the kneaded mixture was placed in a heating furnace, and the interior of the furnace was evacuated and then filled with argon. Subsequently, the furnace was heated under a stream of argon gas. The temperature of the furnace was maintained at 2, 900°C for 10 minutes, and then the furnace was cooled to room temperature. Thereafter, the thus-heat-treated product was applied to a sieve of 63-µm mesh, to thereby yield the powdery carbon material of the present invention. The powdery carbon material was subj ected to battery evaluation by use of a single-cell-type battery evaluation apparatus. The EC 1 electrolytic solution was employed for battery evaluation. Battery characteristics under a load of a large current (0.1 C or 1.0 C) were evaluated. The results are shown in Table 2.

### Comparative Example 10

Petroleum-based coke was subjected to pulverization and classification, to thereby prepare a powder having an average particle size D50 of 20 µm. The thus-prepared powder (19.8 g) was mixed with boron carbide (0.2 g). The resultant mixture was subjected to heat treatment in a heating furnace at 2, 900°C. The thus-heat-treated product was applied to a sieve of 63-µm mesh, to thereby yield a powdery carbon material. The powdery carbon material was subjected to battery evaluation by use of a single-cell-type battery evaluation apparatus. The EC 1 electrolytic solution was employed for battery evaluation. Battery characteristics under a load of a large current (0.1 C or 1.0 C) were evaluated. The results are shown in Table 2.

### Comparative Example 11

Petroleum-based coke was subjected to pulverization and classification, to thereby prepare a powder having an average particle size D50 of 20 µm. The thus-prepared powder (19.8 g) was mixed with boron carbide (0.2 g). The resultant mixture was subjected to heat treatment in a heating furnace at 2, 900°C. The thus-heat-treated product was applied to a sieve of 63-µm mesh, to thereby yield a powdery carbon material. Separately, boron carbide (4 mass%) was added to vapor grown carbon fiber, and the resultant carbon fiber was subjected to graphitization through heat treatment at 2, 900°C. The thus-prepared vapor grown carbon fiber (1 mass%) was dry-mixed with the above-obtained carbon material. The resultant mixture was subjected to battery evaluation by use of a single-cell-type battery evaluation apparatus. The EC 1 electrolytic solution was employed for battery evaluation. Battery characteristics under a load of a large current (0.1 C or 1.0 C) were evaluated. The results are shown in Table 2.

**Table 2**

| | | Discharge capacity | Percent retention of discharge capacity |
|---|---|---|---|
| | | (mA/g) | (%) |
| Example 7 | 0.1 C discharging | 334 | 92 |
| | 1.0 C discharging | 310 | |
| Example 8 | 0.1 C discharging | 333 | 93 |
| | 1.0 C discharging | 309 | |
| Comparative Example 10 | 0.1 C discharging | 325 | 88 |
| | 1.0 C discharging | 289 | |
| Comparative Example 11 | 0.1 C discharging | 332 | 90 |
| | 1.0 C discharging | 300 | |

### Example 9

Varnish A (5.4 parts by mass as reduced to resin solid) was added to ethanol (12. 6 parts by mass) and sufficiently dissolved by stirring. The resultant solution was added to natural graphite having an average particle size D50 of 25 µm such that the concentration of the modified phenol resin solid became 16 mass%, and the thus-formed mixture was kneaded for 30 minutes by use of a universal mixer. Vapor grown carbon fiber (3 mass%) which had been fired at 1, 200°C was added to the resultant mixture, and the thus-formed mixture was kneaded. The kneaded mixture was dried in a vacuum drying apparatus at 80°C for two hours, to thereby remove the ethanol. Subsequently, the thus-dried, kneaded product was subjected to heat treatment at 300°C, and then placed in a heating furnace, and the interior of the furnace was evacuated and then filled with argon. Subsequently, the furnace was heated under a stream of argon gas. The temperature of the furnace was maintained at 2,900°C for 30 minutes, and then the furnace was cooled to room temperature. Thereafter, the thus-heat-treated product was applied to a sieve of 45-µm mesh, to thereby yield the powdery carbon material of the present invention.

The powdery carbon material was subjected to battery evaluation by use of a single-cell-type battery evaluation apparatus. The EC 2 electrolytic solution was employed for battery evaluation.

Charge/discharge condition (amount of current): Charging/discharging was performed at 0.2 C for 1 to 4 cycles, or at 1.0 C for 5 to 50 cycles by CCCV (constant-current constant-voltage) charging/discharging, i.e., CC (constant current) charging was performed at 1 C while voltage was changed from 1.5 V to 2 mV. Subsequently, CV (constant voltage) charging was performed at 2 mV, and charging was stopped when the current value decreased to 25 µA. Results of cycle characteristics obtained are shown in Table 3.

### Example 10

Varnish A (5.4 parts by mass as reduced to resin solid) was added to ethanol (12.6 parts by mass) and sufficiently dissolved by stirring. The resultant solution was added to natural graphite having an average particle size D50 of 25 µm such that the concentration of the modified phenol resin solid became 16 mass%, and the thus-formed mixture was kneaded for 30 minutes by use of a universal mixer. Vapor grown carbon fiber (3 mass%) which had been fired at 1, 200°C was added to the resultant mixture, and the thus-formed mixture was kneaded. The kneaded mixture was dried in a vacuum drying apparatus at 80°C for two hours, to thereby remove the ethanol. Subsequently, the thus-dried, kneaded product was subjected to heat treatment at 300°C, and then placed in a heating furnace, and the interior of the furnace was evacuated and then filled with argon. Subsequently, the furnace was heated under a stream of argon gas. The temperature of the furnace was maintained at 2,900°C for 30 minutes, and then the furnace was cooled to room temperature. Thereafter, the thus-heat-treated product was applied to a sieve of 45-µm mesh, to obtain a powdery carbon material. To this was added vapor grown carbon fiber (3 mass%) obtained by firing at 2, 900°C and the resultant mixture was mixed for 30 seconds by means of a Henschel mixer to thereby yield the powder carbon material of the present invention.

The powdery carbon material was subjected to battery evaluation by use of a single-cell-type battery evaluation apparatus. The EC 2 electrolytic solution was employed for battery evaluation.

Charge/discharge condition (amount of current): Charging/discharging was performed at 0.2 C for 1 to 4 cycles, or at 1.0 C for 5 to 50 cycles by CCCV (constant-current constant-voltage) charging/discharging, i.e., CC (constant current) charging was performed at 1 C while voltage was changed from 1.5 V to 2 mV. Subsequently, CV (constant voltage) charging was performed at 2 mV, and charging was stopped when the current value decreased to 25 µA. Results of cycle characteristics obtained are shown in Table 3.

### Comparative Example 12

The natural graphite having an average particle size D50 of 25 µm was subjected to battery evaluation by use of a single-cell-type battery evaluation apparatus. The EC 2 electrolytic solution was employed for battery evaluation.

Charge/discharge condition (amount of current): Charging/discharging was performed at 0.2 C for 1 to 4 cycles, or at 1.0 C for 5 to 50 cycles by CCCV (constant-current constant-voltage) charging/discharging, i.e., CC (constant current) charging was performed at 1 C while voltage was changed from 1.5 V to 2 mV. Subsequently, CV (constant voltage) charging was performed at 2 mV, and charging was stopped when the current value decreased to 25 µA. Results of cycle characteristics obtained are shown in Table 3.

### Comparative Example 13

Varnish A (5.4 parts by mass as reduced to resin solid) was added to ethanol (12.6 parts by mass) and sufficiently dissolved by stirring. The resultant solution was added to natural graphite having an average particle size D50 of 25 µm such that the concentration of the modified phenol resin solid became 16 mass%, and the thus-formed mixture was kneaded for 30 minutes by use of a universal mixer. The kneaded mixture was dried in a vacuum drying apparatus at 80°C for two hours, to thereby remove the ethanol. Subsequently, the thus-dried, kneaded product was subjected to heat treatment at 300°C, and then placed in a heating furnace, and the interior of the furnace was evacuated and then filled with argon. Subsequently, the furnace was heated under a stream of argon gas. The temperature of the furnace was maintained at 2,900°C for 30 minutes, and then the furnace was cooled to room temperature. Thereafter, the thus-heat-treated product was applied to a sieve of 45-µm mesh, to thereby yield the powdery carbon material of comparison.

The powdery carbon material was subjected to battery evaluation by use of a single-cell-type battery evaluation apparatus. The EC 2 electrolytic solution was employed for battery evaluation.

Charge/discharge condition (amount of current): Charging/discharging was performed at 0.2 C for 1 to 4 cycles, or at 1.0 C for 5 to 50 cycles by CCCV (constant-current constant-voltage) charging/discharging, i.e., CC (constant current) charging was performed at 1 C while voltage was changed from 1.5 V to 2 mV. Subsequently, CV (constant voltage) charging was performed at 2 mV, and charging was stopped when the current value decreased to 25 µA. Results of cycle characteristics obtained are shown in Table 3.

**Table 3**

| | Discharge capacity after 1 cycle (0.2 C) (mAh/g) | Discharge capacity after 50 cycles (1.0 C) (mA/g) | Percent retention of discharge capacity* (%) |
|---|---|---|---|
| Example 9 | 342 | 266 | 78 |
| Example 10 | 340 | 233 | 68 |
| Comparative Example 12 | 354 | 201 | 57 |
| Comparative Example 13 | 344 | 108 | 31 |

| | | | |
|---|---|---|---|
| *) Percent retention of discharge capacity (%) = (discharge capacity (0.2 C) after 1 cycle)/(discharge capacity (1.0 C) after 50 cycles) | | | |

The secondary batteries using the carbon materials of the present invention (Examples 9 and 10) had a percent retention of discharge capacity after 50 cycles of charging/discharging (under a current load of 1.0 C) higher than that of the batteries of Comparative Examples 12 to 13, indicating improved cycle characteristics.

### INDUSTRIAL APPLICABILITY

A secondary battery containing, as an electrode material, the carbon material of the present invention enables charging/discharging in an electrolytic solution predominantly containing ethylene carbonate, propylene carbonate, or ethylene carbonate-propylene carbonate. Furthermore, as compared with a conventional secondary battery, the secondary battery of the invention exhibits more excellent initial efficiency and higher discharge capacity. The method for producing a carbon material of the present invention is advantageous from the viewpoints of production cost and mass production, and the method employs a coating material which is easy to handle and exhibits improved safety.

The carbon material of the present invention in which fibrous carbon is deposited to carbon particles through a polymer exhibiting adhesion to the fibrous carbon has excellent electrical conductivity, and by using a negative electrode having the carbon material of the present invention as an electrode material (negative electrode active material), a secondary battery, particularly lithium ion secondary battery having excellent large current load enduring characteristics and excellent cycle characteristics can be produced.

## Claims

1. A carbon material comprising carbon particles having a graphite structure, the particles having a carbonaceous material deposited on at least a portion of the surface thereof, and fibrous carbon having an average interlayer distance (d₀₀₂) of (002) carbon layers as measured through X-ray diffraction of 0.3395 nm or less, wherein the carbonaceous material is obtained by subjecting a composition containing a polymer to heat treatment.

2. The carbon material as claimed in claim 1, wherein the fibrous carbon is deposited to the carbon particles through the carbonaceous material obtained by subjecting the composition containing the polymer to heat treatment.

3. The carbon material as claimed in claim 2, wherein the polymer is at least one species selected from the group consisting of a phenol resin, a polyvinyl alcohol resin, a furan resin, a cellulose resin, a polystyrene resin, a polyimide resin, and an epoxy resin.

4. The carbon material as claimed in claim 2, wherein the composition containing the polymer is a composition containing a drying oil or a fatty acid derived therefrom and a phenol resin.

5. The carbon material as claimed in claim 2, wherein the carbon particles having a graphite structure and/or the carbonaceous material contains boron.

6. The carbon material as claimed in claim 2, wherein the fibrous carbon comprises vapor grown carbon fiber each filament of which has a hollow structure inside thereof and an outer diameter of 2 to 1,000 nm and an aspect ratio of 10 to 15,000.

7. The carbon material as claimed in claim 6, wherein the vapor grown carbon fiber is a branched carbon fiber.

8. The carbon material as claimed in claim 6 or 7, wherein the carbon material contains the vapor grown carbon fiber in an amount of 0.1 to 20 mass% based on the mass of the carbon particles having a graphite structure.

9. The carbon material as claimed in claim 2, wherein the carbon particles having a graphite structure have an average particle diameter of 5 to 70 µm.

10. The carbon material as claimed in claim 9, wherein the carbon particles having a graphite structure are substantially free of carbon particles having an average particle size of 3 µm or less and/or carbon particles having an average particle diameter of 85 µm or more.

11. The carbon material as claimed in claim 1, wherein the coating thickness of the deposited carbonaceous material is 1 to 10,000 nm.

12. The carbon material as claimed in claim 1, wherein the carbonaceous material comprises carbon having an average interlayer distance (d₀₀₂) of (002) carbon layers as measured through X-ray diffraction of at least 0.3395 nm.

13. The carbon material as claimed in claim 1, wherein the carbonaceous material comprises carbon containing elemental boron.

14. The carbon material as claimed in claim 13, wherein the average interlayer distance (d₀₀₂) of (002) carbon layers is 0.3354 to 0.3370 nm.

15. The carbon material as claimed in claim 1, wherein the carbon particles have a specific surface area of 3 m²/g or less, an aspect ratio of 6 or less, and a tap bulk density of at least 0.8 g/cm³.

16. The carbon material as claimed in claim 1, wherein the carbon particles have an average particle diameter of 8 to 30 µm.

17. The carbon material as claimed in claim 1, wherein the carbon particles are substantially free of carbon particles having an average particle size of 3 µm or less and/or carbon particles having an average particle diameter of 53 µm or more.

18. A method of producing a carbon material as claimed in claim 1, comprising the steps of: depositing a composition containing a polymer onto at least a portion of surface of a carbonaceous particles; mixing the carbonaceous particles with fibrous carbon having an average interlayer distance (d₀₀₂) of (002) carbon layers as measured through X-ray diffraction of 0.3395 nm or less to deposit the fibrous carbon to the carbonaceous particles through the composition containing a polymer; and then subjecting the carbonaceous particles to heat treatment in a non-oxidative atmosphere.

19. The method for producing a carbon material as claimed in claim 18, wherein the polymer comprises a polymer having adhesion to carbon.

20. The method for producing a carbon material as claimed in claim 18, wherein the polymer is at least one species selected from the group consisting of a phenol resin, a polyvinyl alcohol resin, a furan resin, a cellulose resin, a polystyrene resin, a polyimide resin, and an epoxy resin.

21. The method for producing a carbon material as claimed in claim 18, wherein the step of subjecting the carbonaceous particles to heat treatment is performed in the presence of an added boron compound.

22. The method for producing a carbon material as claimed in claim 18, wherein the step of subjecting the carbonaceous particles to heat treatment is a firing step performed at a temperature of 2,000°C or more.

23. The method for producing a carbon material as claimed in claim 18, wherein the carbonaceous particles is graphite particles, and wherein the step of subjecting the carbonaceous particles to heat treatment is performed at a temperature of 50 to 2,000°C.

24. The method for producing a carbon material as claimed in claim 18, wherein the fibrous carbon comprises vapor grown carbon fiber each filament of which has a hollow structure inside thereof and an outer diameter of 2 to 1,000 nm and an aspect ratio of 10 to 15,000.

25. The method for producing a carbon material as claimed in claim 24, wherein the vapor grown carbon fiber is a branched carbon fiber.

26. The method for producing a carbon material as claimed in claim 24, wherein the vapor grown carbon fiber is mixed with carbonaceous powder in an amount of 0.1 to 20 mass% based on the mass of the carbonaceous powder.

27. An electrode paste comprising a carbon material as claimed in any one of claims 1 to 17 and a binder.

28. An electrode comprising an electrode paste as claimed in claim 27.

29. A secondary battery comprising an electrode as claimed in claim 28 as a component.

30. A secondary battery as claimed in claimed 29, wherein the battery comprises a non-aqueous electrolytic solvent selected from the group consisting of ethylene carbonate, diethyl carbonate, dimethyl carbonate, methyl ethyl carbonate, and propylene carbonate; and a solute.

## Patentansprüche

1. Kohlenstoffmaterial, welches Kohlenstoffteilchen mit einer Graphitstruktur, wobei die Teilchen auf einem Teil ihrer Oberfläche abgeschiedenes kohlenstoffhaltiges Material aufweisen, und faserförmigen Kohlenstoff mit einem durch Röntgenstrahlbeugung gemessenen mittleren Zwischenschichtabstand (d₀₀₂) von (002)-Kohlenstoffschichten von 0,3395 nm oder weniger umfasst, wobei das kohlenstoffhaltige Material durch Hitzebehandlung einer ein Polymer enthaltenden Zusammensetzung erhalten wird.

2. Kohlenstoffmaterial nach Anspruch 1, wobei der faserförmige Kohlenstoff durch das kohlenstoffhaltige Material, erhalten durch Hitzebehandlung der das Polymer enthaltenden Zusammensetzung, auf die Kohlenstoffteilchen abgeschieden worden ist.

3. Kohlenstoffmaterial nach Anspruch 2, wobei das Polymer mindestens ein Mitglied ist, das aus der Gruppe ausgewählt ist, die aus einem Phenolharz, einem Polyvinylalkoholharz, einem Furanharz, einem Celluloseharz, einem Polystyrolharz, einem Polyimidharz und einem Epoxyharz besteht.

4. Kohlenstoffmaterial nach Anspruch 2, wobei die das Polymer enthaltende Zusammensetzung eine Zusammensetzung ist, die ein trocknendes Öl oder eine davon abgeleitete Fettsäure und ein Phenolharz enthält.

5. Kohlenstoffmaterial nach Anspruch 2, wobei die Kohlenstoffteilchen mit einer Graphitstruktur und/oder das kohlenstoffhaltige Material Bor enthält.

6. Kohlenstoffmaterial nach Anspruch 2, wobei der faserförmige Kohlenstoff in der Gasphase gewachsene Kohlenstofffasern umfasst, von denen jedes Filament im Inneren eine Hohlstruktur und einen Außendurchmesser von 2 bis 1000 nm und ein Längen-Breiten-Verhältnis von 10 bis 15 000 aufweist.

7. Kohlenstoffmaterial nach Anspruch 6, wobei die in der Gasphase gewachsenen Kohlenstofffasern verzweigte Kohlenstofffasern sind.

8. Kohlenstoffmaterial nach Anspruch 6 oder 7, wobei das Kohlenstoffmaterial die in der Gasphase gewachsenen Kohlenstofffasern in einer Menge von 0,1 bis 20 Massen-%, bezogen auf die Masse der Kohlenstoffteilchen mit Graphitstruktur, enthält.

9. Kohlenstoffmaterial nach Anspruch 2, wobei die Kohlenstoffteilchen mit einer Graphitstruktur einen mittleren Teilchendurchmesser von 5 bis 70 um aufweisen.

10. Kohlenstoffmaterial nach Anspruch 9, wobei die Kohlenstoffteilchen mit Graphitstruktur im wesentlichen frei von Kohlenstoffteilchen einer mittleren Teilchengröße von 3 µm oder weniger und/oder Kohlenstoffteilchen eines mittleren Teilchendurchmessers von 85 µm oder mehr sind.

11. Kohlenstoffmaterial nach Anspruch 11, wobei die Beschichtungsdicke des abgeschiedenen kohlenstoffhaltigen Materials 1 bis 10 000 nm ist.

12. Kohlenstoffmaterial nach Anspruch 1, wobei das kohlenstoffhaltige Material Kohlenstoff mit einem durch Röntgenstrahlbeugung gemessenen mittleren Zwischenschichtabstand (d₀₀₂) von (002)-Kohlenstoffschichten von mindestens 0,3395 nm umfasst.

13. Kohlenstoffmaterial nach Anspruch 1, wobei das kohlenstoffhaltige Material Kohlenstoff umfasst, der elementares Bor enthält.

14. Kohlenstoffmaterial nach Anspruch 13, wobei der mittlere Zwischenschichtabstand (d₀₀₂) der (002)-Kohlenstoffschichten 0,2254 bis 0,3370 nm ist.

15. Kohlenstoffmaterial nach Anspruch 1, wobei die Kohlenstoffteilchen eine spezifische Oberfläche von 3 m²/g oder weniger, ein Längen-Breiten-Verhältnis von 6 oder weniger und eine Rütteldichte von mindestens 0,8 g/cm³ aufweisen.

16. Kohlenstoffmaterial nach Anspruch 1, wobei die Kohlenstoffteilchen einen mittleren Teilchendurchmesser von 8 bis 30 µm aufweisen.

17. Kohlenstoffmaterial nach Anspruch 1, wobei die Kohlenstoffteilchen im wesentlichen frei von Kohlenstoffteilchen einer mittleren Teilchengröße von 3 µm oder weniger und/oder Kohlenstoffteilchen eines mittleren Teilchendurchmessers von 53 µm oder mehr sind.

18. Verfahren zum Herstellen eines Kohlenstoffmaterials nach Anspruch 1, welches die folgenden Stufen umfasst: das Abscheiden einer ein Polymer enthaltenden Zusammensetzung auf mindestens einen Teil der Oberfläche von kohlenstoffhaltigen Teilchen; das Mischen der kohlenstoffhaltigen Teilchen mit faserförmigem Kohlenstoff mit einem durch Röntgenstrahlbeugung gemessenen mittleren Zwischenschichtabstand (d₀₀₂) von (002)-Kohlenstoffschichten von 0,3395 nm oder weniger, um den faserförmigen Kohlenstoff durch die ein Polymer enthaltende Zusammensetzung auf die kohlenstoffhaltigen Teilchen abzuscheiden; und dann die Hitzebehandlung der kohlenstoffhaltigen Teilchen in einer nicht-oxidativen Atmosphäre.

19. Verfahren zum Herstellen eines Kohlenstoffmaterials nach Anspruch 18, wobei das Polymer ein Polymer enthält, das an Kohlenstoff anhaftet.

20. Verfahren zum Herstellen eines Kohlenstoffmaterials nach Anspruch 18, wobei das Polymer mindestens ein Mitglied ist, das aus der Gruppe ausgewählt ist, das aus einem Phenolharz, einem Polyvinylalkoholharz, einem Furanharz, einem Celluloseharz, einem Polystyrolharz, einem Polyimidharz und einem Epoxyharz besteht.

21. Verfahren zum Herstellen eines Kohlenstoffmaterials nach Anspruch 18, wobei die Stufe der Hitzebehandlung der kohlenstoffhaltigen Teilchen in Anwesenheit einer zugesetzten Borverbindung durchgeführt wird.

22. Verfahren zum Herstellen eines Kohlenstoffmaterials nach Anspruch 18, wobei die Stufe der Hitzebehandlung der kohlenstoffhaltigen Teilchen eine bei einer Temperatur von 2000°C oder höher durchgeführte Brennstufe ist.

23. Verfahren zum Herstellen eines Kohlenstoffmaterials nach Anspruch 18, wobei die kohlenstoffhaltigen Teilchen Graphitteilchen sind und wobei die Stufe der Hitzebehandlung der kohlenstoffhaltigen Teilchen bei einer Temperatur von 50 bis 2000°C durchgeführt wird.

24. Verfahren zum Herstellen eines Kohlenstoffmaterials nach Anspruch 18, wobei der faserförmige Kohlenstoff in der Gasphase gewachsene Kohlenstofffasern enthält, von denen jedes Filament eine Hohlstruktur im Inneren und einen Außendurchmesser von 2 bis 1000 nm und ein Längen-Breiten-Verhältnis von 10 bis 15 000 aufweist.

25. Verfahren zum Herstellen eines Kohlenstoffmaterials nach Anspruch 24, wobei die in der Gasphase gewachsenen Kohlenstofffasern verzweigte Kohlenstofffasern sind.

26. Verfahren zum Herstellen eines Kohlenstoffmaterials nach Anspruch 24, wobei die in der Gasphase gewachsenen Kohlenstofffasern mit kohlenstoffhaltigem Pulver in einer Menge von 0,1 bis 20 Massen-%, bezogen auf die Masse des kohlenstoffhaltigen Pulvers, gemischt wird.

27. Elektrodenpaste, die ein Kohlenstoffmaterial nach einem der Ansprüche 1 bis 17 und ein Bindemittel enthält.

28. Elektrode, die eine Elektrodenpaste nach Anspruch 27 enthält.

29. Sekundärbatterie, die eine Elektrode nach Anspruch 28 als eine Komponente enthält.

30. Sekundärbatterie nach Anspruch 29, wobei die Batterie ein nicht-wässeriges elektrolytisches Lösungsmittel, das aus der Gruppe ausgewählt ist, die aus Ethylencarbonat, Diethylcarbonat, Dimethylcarbonat, Methylethylcarbonat und Propylcarbonat besteht; und einen gelösten Stoff umfasst.

## Revendications

1. Matériau de carbone comprenant des particules carbonées présentant une structure de graphite, les particules présentant un matériau carboné déposé sur au moins une portion de leur surface, et du carbone fibreux présentant une distance intercouche moyenne (d₀₀₂) des couches de carbone (002) comme mesurée par diffraction de rayons X de 0,3395 nm ou inférieure, dans lequel le matériau carboné est obtenu en soumettant une composition contenant un polymère à un traitement thermique.

2. Matériau de carbone selon la revendication 1, dans lequel le carbone fibreux est déposé sur les particules de carbone par l'intermédiaire du matériau carboné obtenu en soumettant la composition contenant le polymère à un traitement thermique.

3. Matériau de carbone selon la revendication 2, dans lequel le polymère est au moins une espèce choisie dans le groupe constitué d'une résine de phénol, d'une résine de poly(alcool vinylique), d'une résine de furane, d'une résine de cellulose, d'une résine de polystyrène, d'une résine de polyimide, et d'une résine époxy.

4. Matériau de carbone selon la revendication 2, dans lequel la composition contenant le polymère est une composition contenant une huile desséchante ou un acide gras dérivé de celle-ci et une résine de phénol.

5. Matériau de carbone selon la revendication 2, dans lequel les particules de carbone présentant une structure de graphite et/ou le matériau carboné contient du bore.

6. Matériau de carbone selon la revendication 2, dans lequel le carbone fibreux comprend une fibre de carbone ayant cru en phase vapeur dont chaque filament présente un intérieur de structure creuse de celui-ci et un diamètre externe de 2 à 1 000 nm et un rapport d'allongement de 10 à 15 000.

7. Matériau de carbone selon la revendication 6, dans lequel la fibre de carbone ayant cru en phase vapeur est une fibre de carbone ramifiée.

8. Matériau de carbone selon la revendication 6 ou 7, dans lequel le matériau de carbone contient la fibre de carbone ayant cru en phase vapeur dans une quantité de 0,1 à 20 % en masse rapportée à la masse des particules de carbone ayant une structure de graphite.

9. Matériau de carbone selon la revendication 2, dans lequel les particules de carbone ayant une structure de graphite présentent un diamètre moyen de particule de 5 à 70 µm.

10. Matériau de carbone selon la revendication 9, dans lequel les particules de carbone ayant une structure de graphite sont pratiquement exemptes de particules de carbone ayant une taille moyenne de particule de 3 µm ou inférieure et/ou de particules de carbone ayant un diamètre moyen de particule de 85 µm ou supérieur.

11. Matériau de carbone selon la revendication 1, dans lequel l'épaisseur de revêtement du matériau carboné déposé est de 1 à 10 000 nm.

12. Matériau de carbone selon la revendication 1, dans lequel le matériau carboné comprend du carbone ayant une distance intercouche moyenne (d₀₀₂) des couches de carbone (002) comme mesurée par diffraction de rayons X d'au moins 0,3395 nm.

13. Matériau de carbone selon la revendication 1, dans lequel le matériau carboné comprend du carbone contenant du bore élémentaire.

14. Matériau de carbone selon la revendication 13, dans lequel la distance intercouche moyenne (d₀₀₂) des couches de carbone (002) est de 0,3354 à 0,3370 nm.

15. Matériau de carbone selon la revendication 1, dans lequel les particules de carbone présentent une surface spécifique de 3 m²/g ou inférieure, un rapport d'allongement de 6 ou inférieur, et une masse volumique apparente tassée d'au moins 0,8 g/cm³.

16. Matériau de carbone selon la revendication 1, dans lequel les particules de carbone présentent un diamètre moyen de particule de 8 à 30 µm.

17. Matériau de carbone selon la revendication 1, dans lequel les particules de carbone sont pratiquement exemptes de particules de carbone ayant une taille moyenne de particule de 3 µm ou inférieure et/ou de particules de carbone ayant un diamètre moyen de particule de 53 µm ou supérieur.

18. Procédé de production d'un matériau de carbone selon la revendication 1, comprenant les étapes consistant : à déposer une composition contenant un polymère sur au moins une portion de surface de particules carbonées ; à mélanger les particules carbonées avec du carbone fibreux ayant une distance intercouche moyenne (d₀₀₂) de couches de carbone (002) comme mesurée par diffraction de rayons X de 0,3395 nm ou inférieure pour déposer le carbone fibreux sur les particules carbonées par l'intermédiaire de la composition contenant un polymère ; et à soumettre ensuite les particules carbonées à un traitement thermique dans une atmosphère non oxydante.

19. Procédé de production d'un matériau de carbone selon la revendication 18, dans lequel le polymère comprend un polymère présentant une adhérence au carbone.

20. Procédé de production d'un matériau de carbone selon la revendication 18, dans lequel le polymère est au moins une espèce choisie dans le groupe constitué d'une résine de phénol, d'une résine de poly(alcool vinylique), d'une résine de furane, d'une résine de cellulose, d'une résine de polystyrène, d'une résine de polyimide, et d'une résine époxy.

21. Procédé de production d'un matériau de carbone selon la revendication 18, dans lequel l'étape consistant à soumettre les particules carbonées à un traitement thermique est réalisée en présence d'un composé additionné de bore.

22. Procédé de production d'un matériau de carbone selon la revendication 18, dans lequel l'étape consistant à soumettre les particules carbonées à un traitement thermique est une étape de cuisson réalisée à une température de 2 000°C ou supérieure.

23. Procédé de production d'un matériau de carbone selon la revendication 18, dans lequel les particules carbonées sont des particules de graphite, et dans lequel l'étape consistant à soumettre les particules carbonées à un traitement thermique est réalisée à une température de 50 à 2 000°C.

24. Procédé de production d'un matériau de carbone selon la revendication 18, dans lequel le carbone fibreux comprend une fibre de carbone ayant cru en phase vapeur dont chaque filament présente un intérieur de structure creuse de celui-ci et un diamètre externe de 2 à 1 000 nm et un rapport d'allongement de 10 à 15 000.

25. Procédé de production d'un matériau de carbone selon la revendication 24, dans lequel la fibre de carbone ayant cru en phase vapeur est une fibre de carbone ramifiée.

26. Procédé de production d'un matériau de carbone selon la revendication 24, dans lequel la fibre de carbone ayant cru en phase vapeur est mélangée avec une poudre carbonée dans une quantité de 0,1 à 20 % en masse rapportée à la masse de la poudre carbonée.

27. Pâte d'électrode comprenant un matériau de carbone selon l'une quelconque des revendications 1 à 17 et un liant.

28. Electrode comprenant une pâte d'électrode selon la revendication 27.

29. Accumulateur secondaire comprenant une électrode selon la revendication 28 comme un constituant.

30. Accumulateur secondaire selon la revendication 29, dans lequel l'accumulateur comprend un solvant électrolytique non aqueux choisi dans le groupe constitué du carbonate d'éthylène, du carbonate de diéthyle, du carbonate de diméthyle, du carbonate de méthyléthyle et du carbonate de propylène ; et un soluté.
